# EUROPÄISCHE PATENTANMELDUNG

(11) **EP 4 306 371 A1**
(43) Veröffentlichungstag der Anmeldung: **17.01.2024**
(21) Anmeldenummer: 23184808.6
(22) Anmeldetag: 11.07.2023
(51) Int. Cl.: B60T 7/20, B60T 13/08, B62D 63/06

(54) **BREMSEINRICHTUNG**

(30) Priorität: 11.07.2022 DE 202022103884 U
(71) Anmelder: Alois Kober GmbH, 89359 Kötz (DE)
(72) Erfinder: Gregg, Thomas, 89426 Bergheim (DE); Spiegler, Harald, 89312 Günzburg (DE); Hofhansl, Walter, 89359 Kötz (DE)
(74) Vertreter: ERNICKE Patent- und Rechtsanwälte PartmbB

(57) **Zusammenfassung**

Die Erfindung betrifft eine Bremsvorrichtung (20) für einen strassengängigen Fahrzeuganhänger, insbesondere Tretradanhänger, mit einer oder mehreren Fahrzeugachsen (10,11) und mit Fahrzeugrädern (9), wobei die Bremsvorrichtung (20) mechanisch betätigbare Radbremsen (23) mit Bremszügen (24,25) und eine Auflaufbremsvorrichtung (21) aufweist, welche eine mit einer Anhängerkupplung (3) verbindbare oder verbundene Auflaufeinrichtung (28) und einen Betätigungsstrang mit einem mechanischen Bremskraftübertrager (30) und einem externen Bremskraftverteiler (27) umfasst. Der mechanische Bremskraftübertrager (30) verbindet die Auflaufeinrichtung (28) mit dem Bremskraftverteiler (27) und den dort angeschlossenen Bremszügen (24,25), wobei der Bremskraftübertrager (30) als Bowdenzug (32) ausgebildet ist, der eine äußere druckfeste Hülle (33), ein inneres zugfestes Zugseil (34) sowie jeweilige Hüllenbefestigungen (35) und Zugseilbefestigungen (36) an der Auflaufeinrichtung (26) und am Bremskraftverteiler (27) aufweist.

## Beschreibung

Die Erfindung betrifft eine Bremseinrichtung mit den Merkmalen im Oberbegriff des Hauptanspruchs.

Aus der Praxis sind Kraftfahrzeuganhänger mit Bremsvorrichtungen bekannt, die eine Auflaufbremse aufweisen, welche eine mit der Fahrzeugkupplung verbundene Auflaufeinrichtung und einen Betätigungsstrang umfasst. Der Betätigungsstrang weist einen drehbaren Umlenkhebel, einen mechanischen Bremsübertrager in Form eines Bremsgestänges und einen Bremskraftverteiler in Form eines Waagbalkens auf, wobei am Bremskraftverteiler die zu den Radbremsen führenden und als Bowdenzüge ausgebildeten Bremszüge angeschlossen sind. Die Bremsvorrichtung kann auch eine Feststellbremse umfassen, deren Handbremshebel mit dem Umlenkhebel verbunden ist und diesen dreht, wobei die Feststellbremskraft ebenfalls über das Bremsgestänge und den Waagbalken zu den Bremszügen und den Radbremsen geleitet wird.

Aus der Praxis sind außerdem Fahrradanhänger bekannt, die zum Transport von Kleinkindern eingesetzt werden und eine Auflaufbremsvorrichtung umfassen.

Es ist Aufgabe der vorliegenden Erfindung, eine verbesserte Bremsvorrichtung für straßengängige Fahrzeuganhänger, insbesondere Tretradanhänger, aufzuzeigen.

Die Erfindung löst diese Aufgabe mit den Merkmalen in den selbstständigen Ansprüchen.

Nach einem ersten Erfindungsaspekt ist die Bremsvorrichtung für einen straßengängigen Fahrzeuganhänger, insbesondere einen Tretradanhänger, vorgesehen und ausgebildet, wobei der Fahrzeuganhänger eine oder mehrere Fahrzeugachsen mit Fahrzeugrädern und eine Bremsvorrichtung mit mechanisch betätigbaren Radbremsen nebst Bremszügen sowie eine Auflaufbremsvorrichtung umfasst. Die Auflaufbremsvorrichtung weist eine mit einer Anhängerkupplung verbindbare oder verbundene Auflaufeinrichtung und einen Betätigungsstrang mit einem mechanischen Bremskraftübertrager und einem externen Bremskraftverteiler auf, wobei der mechanische Bremskraftübertrager die Auflaufeinrichtung mit dem Bremskraftverteiler und den dort angeschlossenen Bremszügen der Radbremsen verbindet. Der externe Bremskraftverteiler ist außerhalb der Auflaufeinrichtung und mit Distanz zu dieser angeordnet. Der Bremskraftübertrager ist als Bowdenzug ausgebildet, der eine äußere druckfeste Hülle, ein inneres zugfestes Zugseil sowie jeweilige Hüllenbefestigungen und Zugseilbefestigungen an der Auflaufeinrichtung und am Bremskraftverteiler aufweist. Dies besagten Hüllen- und Zugseilbefestigungen können an der Auflaufeinrichtung und am Bremskraftverteiler montiert und befestigt werden.

Die beanspruchte Bremsvorrichtung ist eine eigenständig herstellbare und handelbare Vorrichtung. Sie kann an vorhandenen straßengängigen Fahrzeuganhänger nachgerüstet oder im Tausch gegen eine andere bestehende Bremsvorrichtung umgerüstet werden. Die beanspruchte Bremsvorrichtung kann auch bei der Herstellung und Erstausrüstung eines straßengängigen Fahrzeuganhängers eingebaut werden.

Die beanspruchte Bremsvorrichtung und ein damit ausgestatteter straßengängiger Fahrzeuganhänger haben verschiedene Vorteile. Die Bremsvorrichtung, insbesondere die Auflaufbremsvorrichtung, hat einen geringen Bauaufwand und niedrigere Kosten. Sie ist robust und lässt sich leicht montieren.

Die beanspruchte Bremsvorrichtung eignet sich besonders für Tretradanhänger, die von Zugfahrzeugen in Form von Treträdern allein mit Muskelkraft oder ggf. mit motorischer Unterstützung der Muskelkraft durch einen bevorzugt elektrischen Hilfsantrieb bewegt werden. Ein solches Tretrad kann in unterschiedlicher Weise ausgebildet sein, z.B. als zweirädriges Fahrrad oder Lastenrad mit z.B. aufrechter Sitzposition oder als Liegendrad mit liegender Sitzposition. Ferner ist eine andere Ausbildung mit mehr als zwei Rädern, z.B. als Dreirad, oder eine Ausbildung für mehrere Personen, z.B. als Tandemrad, möglich. Das Zugfahrzeug kann auch ein Kraftfahrzeug sein. Das Zugfahrzeug kann eine mit der Anhängerkupplung zusammenwirkende Zugkupplung, z.B. eine Kugelkopfkupplung, aufweisen.

Die beanspruchte Bremsvorrichtung hat eine besonders gute und schnell ansprechende Bremswirkung im Fall eines Auflaufens des Fahrzeuganhängers auf das Zugfahrzeug. Dies ist für einen Tretradanhänger und das gegen Anhängerschub empfindliche Tretrad von besonderem Vorteil. Solche Tretradanhänger können z.B. für eine Transport relativ schwerer Lasten, incl. beladener Paletten, bei Kurier- und Lieferdiensten eingesetzt werden.

Durch einen Bowdenzug können Zug- und Druckkräfte übertragen werden. Zudem ist ein Bowdenzug weitgehend unempfindlich gegen Umgebungseinflüsse. Die zu den Radbremsen führenden Bremszüge können ebenfalls als Bowdenzüge ausgebildet sein. Dies bietet vielfältige und variable Anbindungsmöglichkeiten und Möglichkeiten zur mechanischen Kraft- und Bewegungsübertragung zu den ebenfalls bevorzugt mechanischen Radbremsen, z.B. Trommelbremsen. Hierdurch kann die Bremsvorrichtung an unterschiedliche Erfordernisse angepasst werden.

In einer bevorzugten Ausgestaltung ist der Bremskraftübertrager derart ausgebildet und mit der Auflaufeinrichtung verbunden, dass bei der Auflaufbewegung die an der Auflaufeinrichtung angeordnete Hüllenbefestigung bewegt und verstellt wird. Die Auflaufbewegung und die Auflaufbremskräfte werden dabei über die druckfeste Hülle des Bowdenzugs übertragen. Die Zugseilbefestigung des Bowdenzugs kann an der Auflaufeinrichtung relativ ortsfest angeordnet und montiert sein. Die Zugseilbefestigung wird bei der Auflaufbewegung nicht mitbewegt. Die Zugseilbefestigung kann mit einem Stützmittel an der Auflaufeinrichtung stationär angeordnet und abgestützt sein. Für die technische Umsetzung gibt es verschiedene Möglichkeiten.

Eine solche Ausgestaltung mit verstellbarer Hüllenbefestigung ist besonders aufwandsarm und einfach. Die Bremsvorrichtung kann ohne einen Umlenkhebel auskommen. Die Auflaufeinrichtung kann z.B. ein beim Auflaufen linear verschiebliches Auflaufrohr und eine das Auflaufrohr umgebende hülsenartige Führung haben, wobei die Hüllenbefestigung am Auflaufrohr montiert ist und bei dessen Auflauf- und Rückstellbewegungen mitbewegt und verstellt wird. Die Zugseilbefestigung kann hingegen im Innenraum des Auslaufrohrs und an einem mit der Führung verbundenen sowie gegenüber der Auflaufbewegung relativ ortsfesten Stützmittel montiert werden. Die Hüllenbefestigung kann z.B. an einem stirnseitigen Rohrverschluss oder Deckel bevorzugt zentral montiert sein. Das Zugseil kann aus der Hülle am Rohrverschluss oder im Innenraum des Auslaufrohrs austreten und zum Stützmittel geführt sein. Diese Ausgestaltungen ermöglichen eine besonders sichere und geschützte Anordnung und Funktion der Bowdenzugteile.

Das Stützmittel kann als Stützbolzen ausgebildet sein, der das Auflaufrohr an axialen Ausschnitten im Rohrmantel durchsetzt. Dank der axialen Ausschnitte wird die Auflauf-und Rückstellbewegung des Auflaufrohrs in seiner Führung nicht behindert.

Die Auflaufeinrichtung kann als Teil einer Lenkeinrichtung für den Fahrzeuganhänger ausgebildet sein. Sie kann z.B. die mit einer Lenkstange verbindbar oder verbunden sein. Die Auflaufeinrichtung kann sich zum Ausführen von Lenkbewegungen drehen, wobei die Drehachse durch das besagte Stützmittel, insbesondere den Stützbolzen, oder an anderer Stelle verlaufen kann. Die Drehbewegungen der Auflaufeinrichtung können durch die Lenkstange auf die Fahrzeugräder an der betreffenden Fahrzeugachse übertragen werden.

In einer anderen Ausführungsform der Lenkeinrichtung kann die Auflaufeinrichtung an einer drehbaren Deichsel frontseitig angeordnet sein, wobei die Deichsel mit einer Lenkstange verbindbar oder verbunden sein kann und sich zum Ausführen von Lenkbewegungen drehen kann. Die bevorzugt verstellbare Deichsel kann ein eigenes Drehlager aufweisen. Diese Ausführungsform ist günstig, um bedarfsweise die Höhenlage der Auflaufeinrichtung und der dort frontseitig angeordneten Anhängerkupplung verändern und z.B. an das Zugfahrzeug anpassen zu können.

Die Lenkeinrichtung kann vorteilhafterweise als Achsschenkellenkung ausgestaltet sein. Dies ermöglicht den Anbau der Lenkeinrichtung an einer ansonsten starr am Fahrzeuganhänger montierten Fahrzeugachse.

Die Auflaufeinrichtung kann einen bevorzugt gefederten und fluidischen Dämpfer für die Auflaufbewegungen aufweisen. Durch den z.B. hydraulischen und/oder pneumatischen Dämpfer können im Gespannbetrieb ruckartige Fahrbewegungen des Zugfahrzeugs, insbesondere eines Tretrads, abgedämpft werden. Das Bremsverhalten der Auflaufbremsvorrichtung kann harmonisiert werden. Bei einem gefederten Dämpfer, insbesondere einer Gasfeder, kann die Feder nach dem Auflaufbremsen auch die Ausschubbewegung der Auflaufeinrichtung, insbesondere des Auslaufrohrs und der damit verbundenen Fahrzeugkupplung bewirken.

Der Bremskraftübertrager kann derart ausgebildet und mit dem Bremskraftverteiler verbunden sein, dass die Hüllenbefestigung am Bremskraftverteiler relativ ortsfest montiert ist und die Zugseilbefestigung beweglich angeordnet sowie mit den Bremszügen der Radbremsen für deren Betätigung verbunden ist. Bei einer Auflaufbewegung führt die Verstellung der Hülle des Bowdenzugs zu einem Anspannen seines Zugseils und einer damit einhergehenden Radbremsbetätigung.

In einer vorteilhaften Ausgestaltung weist die Auflaufbremsvorrichtung einen Bremskraftverstärker im Betätigungsstrang auf. Der Bremskraftverstärker kann an verschiedenen Stellen des Betätigungsstrangs, insbesondere am Bremskraftübertrager, angeordnet sein. In einer bevorzugten Ausgestaltung ist der Bremskraftverstärker am Bremskraftverteiler angeordnet. Für die Ausbildung und die bevorzugte gegenseitige Verbindung des Bremskraftverteilers und des Bremskraftverstärkers gibt es verschiedene Möglichkeiten.

Der Bremskraftverstärker ist besonders vorteilhaft, wenn die Auflaufbewegung über eine Hüllenverstellung des Bowdenzugs übertragen wird. Der Bremskraftverstärker kann insbesondere auf das Zugseil des Bremskraftübertragers und dessen Zugseilbefestigung einwirken. Auch bei kleinen Auflaufbewegungen und geringen Auflaufkräften können hohe Bremskräfte erzeugt werden.

Dies ist günstig, um Fahrzeuganhänger, insbesondere Tretradanhänger, mit relativ hohen Fahrzeuggewichten und bei relativ niedrigen Fahrgeschwindigkeiten wirksam abbremsen zu können. Das zulässige Gesamtgewicht eines solchen Fahrzeuganhängers, insbesondere eines Tretradanhängers, kann z.B. ca. 300 kg betragen. Besondere Vorteile ergeben sich im Gespannbetrieb mit einem Tretrad und bei Fahrgeschwindigkeiten von 30 km/h oder weniger sowie bei relativ abrupten Fahr- und Bremsbewegungen des Zugfahrzeugs, insbesondere eines Tretrads. Die optimierte Bremswirkung der beanspruchten Bremsvorrichtung ist günstig, um beim Bremsen möglichst wenig Auflauf- und Schubkräfte auf das Zugfahrzeug, insbesondere ein Tretrad, zu übertragen.

Der Bremskraftverstärker ist hierfür besonders vorteilhaft. Günstig sind auch Radbremsen mit Kraftverstärkung, z.B. Trommelbremsen mit einem Bremshebel und einer hiervon mit Hebelverstärkung betätigten Bremswelle. Im Gespannbetrieb des Fahrzeuganhängers mit einem Kraftfahrzeug kann der Bremskraftverstärker entbehrlich sein.

In einer vorteilhaften Ausgestaltung umfasst der Bremskraftverstärker ein Lenkergetriebe mit schwenkbaren Lenkarmen und einer Übersetzung. Das Lenkergetriebe kann zwischen der Zugseilbefestigung des auflaufbetätigten Bremskraftübertragers und den Bremszügen angeordnet sein. Das Lenkergetriebe kann eine relativ hohe Übersetzung haben. Es kann z.B. als Kniehebelgetriebe ausgebildet sein.

Das Lenkergetriebe kann abtriebsseitig mit den Hüllenbefestigungen der Bremszüge zu den Radbremsen verbunden sein und kann diese beim Auflaufbremsen und der Auflaufbewegung betätigen. Die Hüllenbetätigung des Bremsübertragers kann mit einer Hüllenbetätigung der Bremszüge gekoppelt werden, wobei die Übersetzung besonders nützlich und wirksam sein kann. Die besagte Kopplung der Hüllenverstellungen kann auch bei einer Bremsvorrichtung ohne Bremskraftverstärker eingesetzt werden. Die Zugseilbefestigungen der Bremszüge können an einer ggf. beweglichen Stellbrücke des Bremskraftverteilers montiert sein.

Die Bremsvorrichtung kann außer der Auslaufbremsvorrichtung auch eine mit den Bremszügen verbundene Feststellbremsvorrichtung umfassen. Diese kann einen Bremsbetätiger und einen mechanischen Bremskraftübermittler aufweisen, wobei dieser Bremskraftübermittler und der Bremskraftübertrager der Auflaufbremsvorrichtung getrennt voneinander und eigenständig angeordnet und jeweils mit dem Bremskraftverteiler verbunden sein können. Dies ist ein bedeutsamer Unterschied der beanspruchten Bremsvorrichtung gegenüber der praxisbekannten Bremsvorrichtung von Kraftfahrzeuganhängern, bei denen die Auflaufeinrichtung und der Handbremshebel gemeinsam auf einen Umlenkhebel und auf ein Bremsgestänge einwirken, welches mit dem Bremskraftverteiler verbunden ist.

Die getrennte Anordnung von Bremskraftübertrager und Bremskraftübermittler ermöglicht weitere besondere Ausgestaltungen der beanspruchten Bremsvorrichtung. Insbesondere können die Auflaufbremsvorrichtung und die Feststellbremsvorrichtung unterschiedliche Bowdenzugteile der zu den Radbremsen führenden Bremszüge betätigen und verstellen. In einer bevorzugten Ausgestaltung überträgt der Bremskraftübertrager die Auflaufbewegungen und die Auflaufkräfte auf die Hüllen der Bremszüge, wobei der Bremskraftübermittler der Feststellbremsvorrichtung die Betätigungskraft und Betätigungsbewegung auf die Zugseile der besagten Bremszüge überträgt.

Der besagte Bremskraftübermittler der Feststellbremsvorrichtung kann ebenfalls als Bowdenzug in der vorgenannten Art ausgebildet sein. Bei einer Betätigung der Feststellbremsvorrichtung kann die Zugseilbefestigung am Bremsbetätiger bewegt und verstellt werden. Der Bremsbetätiger kann dabei einen schwenkbaren Handbremshebel mit einer Spannscheibe und einer Feder, insbesondere einer Druckpunktfeder, aufweisen. Die Zugseilbefestigung kann an der Spannscheibe montiert sein. Sie wird von dem Handbremshebel bei einer Spannscheibendrehung bewegt. Hierbei kann über eine exzentrische Spannscheibenlagerung eine Übersetzung hergestellt werden. Die Feder, insbesondere Druckpunktfeder, kann einerseits die Handkraft bei der Betätigung der Feststellbremsvorrichtung unterstützen und kann die angezogene Bremsstellung festhalten. Die Feder kann andererseits im Lösezustand der Feststellbremsvorrichtung die Spannscheibe in die Ausgangsstellung bewegen und den Bowdenzug des Bremskraftübermittlers entlasten.

Die beanspruchte Ausgestaltung des Bremsbetätigers kann in unterschiedlichen Lagen am Fahrzeuganhänger, insbesondere an dessen Chassis montiert werden. Sie lässt sich auch an unterschiedliche Ausbildungen des Fahrzeuganhängers, insbesondere mit einer oder mehreren Fahrzeugachsen, mit oder ohne Lenkeinrichtung oder dergleichen anpassen.

In einer vorteilhaften Ausgestaltung ist der Bremskraftübermittler derart ausgebildet und mit dem Bremskraftverteiler verbunden, dass seine Hüllenbefestigung am Bremskraftverteiler relativ ortsfest montiert ist und die Zugseilbefestigung beweglich angeordnet sowie mit den Bremszügen für deren Betätigung verbunden ist. Hierfür kann z.B. die Zugseilbefestigung des Bremskraftübermittlers mit einer beweglichen und geführten Stellbrücke des Bremskraftverteilers verbunden sein, an welcher auch die Zugseilbefestigung der Bremszüge für deren Betätigung montiert sind. Eine solche Ausgestaltung eignet sich besonders gut für eine Kombination mit dem vorbeschriebenen Bremskraftverstärker der Auflaufbremsvorrichtung. Der Bremskraftübertrager und der Bremskraftübermittler können jeweils zentral am Bremskraftverteiler angeschlossen und übereinander angeordnet sein. Dies ist vorteilhaft für eine gleichmäßige Bremskraftverteilung auf die linke(n) und rechte(n) Radbremse(n).

Die getrennte Anordnung und getrennte Verbindung eines manuell betätigten mechanischen Bremskraftübermittlers und eines auflaufbetätigten mechanischen Bremskraftübertragers mit einem Bremskraftverteiler für mechanisch betätigte Radbremsen und deren Bowden-Bremszüge ist ein eigenständiger Erfindungsaspekt. Dieser ist nicht an eine Bowdenzug-Ausbildung des Bremskraftübermittlers und/oder des Bremskraftübertragers gebunden und kann auch bei anderen Bremsvorrichtungen mit anders ausgebildeten Bremskraftübermittlern und/oder Bremskraftübertragern eingesetzt werden. Dieser eigenständige Erfindungsaspekt kann mit dem Merkmal ergänzt werden, dass der Bremskraftübermittler und der Bremskraftübertrager unterschiedliche Bowdenzugteile der zu den Radbremsen führenden Bremszüge betätigen und verstellen.

Dies ist vorteilhaft für eine Funktionstrennung der Auflaufbremsvorrichtung und der Feststellbremsvorrichtung. Außerdem ergeben sich Vorteile, wenn weitere Bremskomponenten nebst Sensorik angebaut werden, z.B. ein Antiblockier-System für die Radbremsen und/oder eine sog. Schlingerbremse, die Schleuderbewegungungen des Fahrzeuganhängers um die Hochachse und/oder Wankbewegungen um die Längsachse im Gespann- und Fahrbetrieb erkennt und eigenständig die Fahrzeugräder zur Gespannstabilisierung bremst. Eine solche weitere Bremskomponente kann z.B. an dem gleichen Bowdenzugteil der Bremszüge angreifen wie die Auflaufbremsvorrichtung und kann diese ggf. überlagern.

Der beanspruchte straßengängige Fahrzeuganhänger, insbesondere Tretradanhänger kann mit der beanspruchten Bremsvorrichtung ausgestattet sein. Diese kann zumindest die Auflaufbremsvorrichtung und vorzugsweise auch die Feststellbremsvorrichtung sowie ggf. weitere Bremskomponenten umfassen.

Der Fahrzeuganhänger kann z.B. nur eine einzelne und gebremste Fahrzeugachse umfassen, wobei er z.B. als sog. Zentralachsanhänger, ausgebildet sein kann. In einer anderen Ausgestaltung kann der Fahrzeuganhänger zwei oder mehr Fahrzeugachsen umfassen. Eine dieser Fahrzeugachsen kann als lenkbare Achse mit einer Lenkeinrichtung ausgebildet sein, wobei die Auflaufeinrichtung bevorzugt an der lenkbaren Fahrzeugachse montiert ist. Die lenkbare Fahrzeugachse kann ungebremst sein. Die ein oder mehreren weiteren Fahrzeugachsen des Fahrzeuganhängers können jeweils Radbremsen umfassen und können von der Bremsvorrichtung beaufschlagt werden.

Die Auflaufeinrichtung kann auch an einer Deichsel des Fahrzeuganhängers, insbesondere an einem Deichselholm, montiert werden. Dies ist günstig für einen Fahrzeuganhänger mit einer einzelnen Fahrzeugachse. Dies kann eine nicht lenkbare Fahrzeugachse ohne Lenkeinrichtung sein.

Bei einer lenkbaren Achse mit einer Lenkeinrichtung empfiehlt sich die Ausbildung der Lenkeinrichtung als Achsschenkellenkung. Die Auflaufeinrichtung kann schwenkbar an einer Fahrzeugachse, insbesondere an deren Achskörper, montiert sein. Über eine Lenkstange kann die Bewegung der Auflaufeinrichtung auf zumindest einen lenkbaren Achsschenkel der Achsschenkellenkung übertragen werden. Die beidseitigen Achsschenkel können auch über eine Koppelstange direkt miteinander gekoppelt werden und synchrone Schwenk- und Lenkbewegungen ausführen.

Günstig ist in einem solchen Fall die Ausrüstung der Fahrzeugachse mit einem geteilten Achskörper, wobei die Achskörperteile im mittleren Fahrzeugbereich voneinander distanziert sind und ein Stützbeschlag den gebildeten Abstand überbrückt. Die Auflaufeinrichtung kann schwenkbar an dem Stützbeschlag montiert sein. Die Auflaufeinrichtung und der geteilte Achskörper können auf gleicher Höhe angeordnet sein. Dies ist für eine Übertragung der Schwenk- und Lenkbewegungen der Auflaufeinrichtung auf die Lenkeinrichtung, insbesondere eine Achsschenkellenkung, von Vorteil.

Gemäß eines weiteren eigenständigen Erfindungsaspekts kann ein strassengängiger Fahrzeuganhänger, insbesondere Tretradanhänger, mit einer lenkbaren Fahrzeugachse und einer Achsschenkellenkung ausgerüstet sein, wobei die mit der Anhängerkupplung verbundene Auflaufeinrichtung an einem starren Achskörper der lenkbaren Fahrzeugachse schwenkbar montiert ist und über eine Lenkstange mit einem lenkbaren Achsschenkel der Achsschenkellenkung verbunden ist. Dieser Erfindungsaspekt ist nicht an eine Bowdenzug-Ausbildung des Bremskraftübertragers und/oder des Bremskraftübermittlers gebunden und kann auch bei anderen Bremsvorrichtungen eingesetzt mit anders ausgebildeten Bremskraftübermittlern und/oder Bremskraftübertragern eingesetzt werden.

Der beanspruchte Fahrzeuganhänger kann ein Chassis aufweisen, an dem beliebige Aufbauten montiert werden können. Dies können Kofferaufbauten für einen Lastentransport, Sitze für einen Personentransport oder dgl. sein. Die beanspruchte Ausbildung der Bremsvorrichtung ist flexibel und kann an unterschiedliche Chassisabmessungen angepasst werden. Insbesondere können Radstände vergrößert werden und/oder Achsenzahlen verändert werden.

Für die Bremsvorrichtung ist es günstig, wenn der Bremsbetätiger der Feststellbremsvorrichtung am Chassis, insbesondere an dessen vorderen Bereich, angeordnet ist. Der Bremsbetätiger kann unabhängig von der Auflaufeinrichtung platziert und vorzugsweise am Chassis montiert werden.

Für die beanspruchte Bremsvorrichtung ist es ferner günstig, wenn der Bremskraftverteiler an einer Fahrzeugachse, insbesondere an ihrem Achskörper, angeordnet und abgestützt ist. Wenn ein Bremskraftverstärker vorhanden ist, kann dieser ebenfalls in dieser Weise angeordnet und abgestützt sein. Der Achskörper kann über endseitige Achsböcke am Chassis, z.B. an dessen Längsträgern, befestigt und abgestützt sein, vorzugsweise in hängender Lage. Günstig ist dabei eine Ausbildung der ein oder mehreren Fahrzeugachsen als Radlenkerachse mit endseitig am Achskörper drehbar gelagerten Radschwinghebeln. Der Achskörper kann sich über die gesamte Fahrzeugbreite erstrecken und kann insbesondere als hohles Achsrohr ausgebildet sein. Alternativ ist eine verkürzte Ausbildung und Mehrfachanordnung in Form von Halbachsen oder Stummelachsen möglich.

In den Unteransprüchen sind weitere vorteilhafte Ausgestaltungen der Erfindung angegeben.

Die beanspruchte Bremsvorrichtung und der beanspruchte Fahrzeuganhänger können folgende weitere Ausgestaltungen umfassen, die einzeln oder in Kommbination untereinander benutzt werden können.

Die Bremszüge der Radbremsen können als Bowdenzüge mit einer äußeren druckfesten Hülle, einem inneren zugfesten Zugseil sowie jeweilige Hüllenbefestigungen und Zugseilbefestigungen ausgebildet sein.

Die Zugseilbefestigung des als Bowdenzug ausgebildeten Bremskraftübertrager kann im Innenraum eines Auflaufrohrs an einem mit dessen Führung verbundenen und gegenüber der Auflaufbewegung relativ ortsfesten Stützmittel montiert sein. Das Stützmittel kann als Stützbolzen ausgebildet sein, der das Auflaufrohr an axialen Ausschnitten im Rohrmantel durchsetzt.

Die Auflaufeinrichtung, insbesondere das linear verschiebliche Auflaufrohr, kann einen Dämpfer für die Auflaufbewegungen aufweisen.

Der bevorzugt aus Bowdenzug gestaltete Bremskraftübermittler einer Feststellbremsvorrichtung kann derart ausgebildet und mit einem Bremsbetätiger, insbesondere dessen Handbremshebel, verbunden sein, dass bei der Betätigung die Zugseilbefestigung am Bremsbetätiger bewegt und verstellt wird.
Der Bremsbetätiger kann einen schwenkbaren Handbremshebel mit einer Spannscheibe und einer Feder, insbesondere einer Totpunktfeder, umfassen, wobei die Zugseilbefestigung des Bremskraftübermittlers an der Spannscheibe montiert ist.

Die Zugseilbefestigung des Bremskraftübermittlers kann mit einer beweglichen und geführten Stellbrücke des Bremskraftverteilers verbunden sein, an welcher die Zugseilbefestigungen der Bremszüge für deren Betätigung montiert sind.

Bei dem Fahrzeuganhänger können eine oder mehrere Fahrzeugachsen als Radlenkerachsen mit einem bevorzugt rohrartigen Achskörper und mit daran drehbar gelagerten Radschwinghebeln ausgebildet sein. Die drehbaren Radschwinghebel können mit einer Gummischnurfederung und/oder einer Torsionsstabfederung im Achskörper verbunden sein.

Die Lenkeinrichtung der lenkbaren Fahrzeugachse des Fahrzeuganhängers kann als Achsschenkellenkung ausgebildet sein, wobei die Auflaufeinrichtung schwenkbar an einem Achskörper der lenkbaren Fahrzeugachse montiert sein kann und über eine Lenkstange mit zumindest einem lenkbaren Achsschenkel der Achsschenkellenkung verbunden sein kann. Die lenkbaren Achsschenkel können durch eine Koppelstange direkt miteinander verbunden sein.

Die lenkbare Fahrzeugachse kann einen im mittleren Bereich geteilten Achskörper aufweisen, dessen Achskörperteile mit axialem Abstand voneinander angeordnet und mittels eines Stützbeschlags miteinander verbunden sein können, wobei die Auflaufeinrichtung oder eine schwenkbare Deichsel zwischen den Achskörperteilen im Abstandsbereich angeordnet und drehbar am Stützbeschlag gelagert sein kann.

Der Bremskraftverteiler und ggf. der Bremskraftverstärker der Bremsvorrichtung können an einer Fahrzeugachse des Fahrzeuganhängers angeordnet und abgestützt sein.

Der Fahrzeuganhänger kann ein Chassis aufweisen, wobei der Bremsbetätiger der Feststellbremsvorrichtung am Chassis, insbesondere an dessen vorderem Bereich, angeordnet sein kann.

Ein eigenständiger Erfindungsgedanke betrifft einen strassengängiger Fahrzeuganhänger, insbesondere Tretradanhänger, mit einer oder mehreren Fahrzeugachsen, mit Fahrzeugrädern und mit einer Bremsvorrichtung, die mechanisch betätigbare Radbremsen mit Bremszügen und eine Auflaufbremsvorrichtung aufweist, welche eine mit einer Anhängerkupplung verbundene Auflaufeinrichtung und einen Betätigungsstrang mit einem mechanischen Bremskraftübertrager und einem externen Bremskraftverteiler umfasst, wobei der mechanische Bremskraftübertrager die Auflaufeinrichtung mit dem Bremskraftverteiler und den dort angeschlossenen Bremszügen verbindet. Der Fahrzeuganhänger weist eine lenkbare Fahrzeugachse und eine Lenkeinrichtung auf, die als Achsschenkellenkung ausgebildet ist, wobei die Auflaufeinrichtung an einem starren Achskörper der lenkbaren Fahrzeugachse schwenkbar montiert ist und über eine Lenkstange mit einem lenkbaren Achsschenkel der Achsschenkellenkung verbunden ist. Die Auflaufeinrichtung kann alternativ direkt an einer Deichsel montiert sein, welche schwenkbar am Achskörper gelagert ist, wobei die Deichsel über eine Lenkstange mit einem lenkbaren Achsschenkel der Achsschenkellenkung verbunden ist. Die lenkbaren Achsschenkel können in beiden Varianten durch eine Koppelstange direkt miteinander verbunden sein. Die Bremsvorrichtung kann in anderer Weise als die beanspruchte Bremsvorrichtung ausgebildet sein.

Die Erfindung ist in den Zeichnungen beispielhaft und schematisch dargestellt. Im Einzelnen zeigen:
- Figur 1:: ein Gespann aus einem Zugfahrzeug und einem Fahrzeuganhänger,
- Figur 2:: eine erste Variante des Fahrzeuganhängers in einer perspektivischen rückwärtigen Draufsicht,
- Figur 3:: eine andere und zum Teil abgebrochene perspektivische Ansicht des Fahrzeuganhängers von Figur 2,
- Figur 4:: eine teilweise abgebrochene perspektivische Frontansicht des Fahrzeuganhängers,
- Figur 5:: eine andere, teilweise abgebrochene perspektivische Draufsicht auf den Fahrzeuganhänger,
- Figur 6:: einen zentralen Längsschnitt durch den Fahrzeuganhänger von Figur 1 bis 5,
- Figur 7:: eine perspektivische und geschnittene Detaildarstellung einer Auflaufeinrichtung und eines Bremsbetätigers,
- Figur 8:: eine abgebrochene und perspektivische Ansicht eines Bremskraftverteilers und eines Bremskraftverstärkers an einer Fahrzeugachse,
- Figur 9:: eine geschnittene Darstellung der Anordnung von Figur 8,
- Figur 10:: eine andere Variante des Fahrzeuganhängers mit einer einzelnen Fahrzeugachse in einer perspektivischen Draufsicht,
- Figur 11 und 12:: eine Stirnansicht und eine Draufsicht des Fahrzeuganhängers von Figur 10,
- Figur 13:: einen perspektivischen zentralen Längsschnitt durch den Fahrzeuganhänger von Figur 10 bis 12,
- Figur 14:: einen abgebrochenen Längsschnitt durch die Auflaufeinrichtung und den vorderen Deichselbereich,
- Figur 15 u. 16:: verschiedene perspektivische Ansichten des Bremsbetätigers einer Feststellbremsvorrichtung an einem transparent dargestellten Querträger des Chassis,
- Figur 17 u. 18:: eine kraftverstärkende Ausbildung der Radbremse mit einem schwenkbaren Bremshebel und einer Bremswelle,
- Figur 19:: eine weitere Variante des Fahrzeuganhängers und der Bremsvorrichtung in einer zum Teil abgebrochene perspektivische Ansicht,
- Figur 20:: einen Längsschnitt durch den Fahrzeuganhänger und die Bremsvorrichtung von Figur 19,
- Figur 21:: eine abgebrochene perspektivische Heckansicht der Bremsvorrichtung und des Bremskraftverteilers des Fahrzeuganhängers von Figur 19,
- Figur 22 u. 23:: eine abgewandelte Ausführung eines Bremskraftverteilers in verschiedenen Ansichten,
- Figur 24 u. 25:: eine weitere abgewandelte Ausführung eines Bremskraftverteilers in verschiedenen Ansichten,
- Figur 26:: eine Variante des Bremsbetätigers einer Feststellbremsvorrichtung in einer perspektivischen geschnittenen Ansicht und
- Figur 27:: eine zusätzliche Variante des Fahrzeuganhängers und der Bremsvorrichtung in einer zum Teil abgebrochene perspektivische Ansicht,

Die Erfindung betrifft eine Bremsvorrichtung (20) für einen straßengängigen Fahrzeuganhänger (1), insbesondere Tretradanhänger, und den damit ausgerüsteten Fahrzeuganhänger (1). Die Erfindung betrifft auch weitere vorstehend und nachstehend genannte eigenständige Erfindungsaspekte einer Bremsvorrichtung und eines straßengängigen Fahrzeuganhängers.

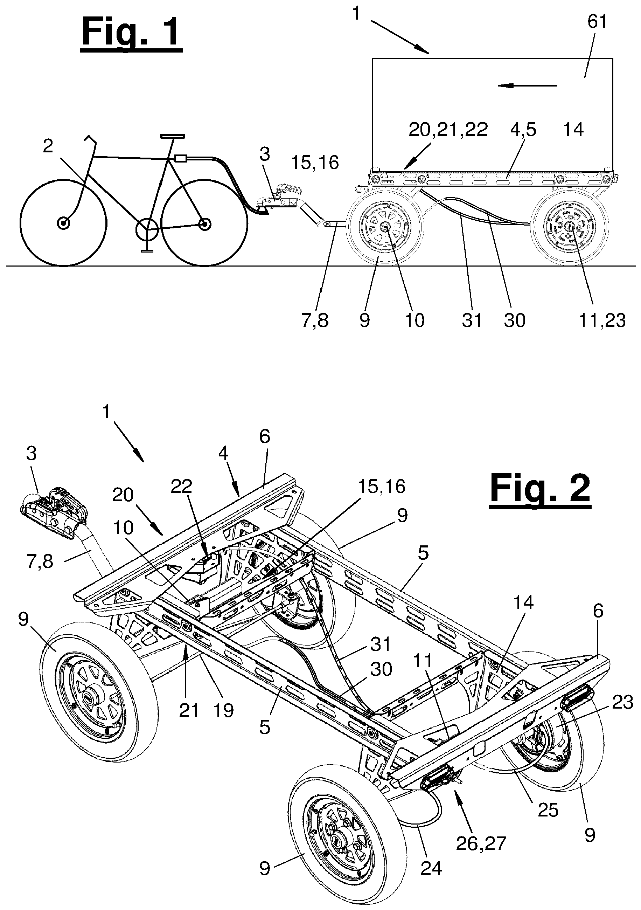

Figur 1 zeigt in einer schematischen Seitenansicht ein Gespann aus einem Zugfahrzeug (2) und einem angekuppelten straßengängigen Fahrzeuganhänger (1), der üblicherweise auf Straßen bewegt wird. Die Vorwärts-Fahrtrichtung ist durch einen Pfeil markiert. Hierauf beziehen sich die Ortsangaben vorn und hinten.

Der in den Ausführungsbeispielen gezeigte Fahrzeuganhänger (1) ist als Tretradanhänger ausgebildet und ist insbesondere für ein Zugfahrzeug (2) in Form eines Tretrads vorgesehen und gestaltet. Der Fahrzeuganhänger (1) hat z.B. ein Fahrzeuggewicht bis ca. 300 kg und ggf. auch darüber. Das Tretrad kann z.B. als zweirädriges Fahrrad oder Liegendrad oder als Dreirad oder in anderer Weise ausgebildet sein. Das Tretrad kann auch ein Lastenfahrrad sein, welches bereits eine behälterartige Lastenaufnahme umfasst, wobei mit dem angekuppelten Tretradanhänger (1) der Lastenumfang vergrößert werden kann.

Der Fahrzeuganhänger (1) weist eine Bremsvorrichtung (20) auf, die eine Auflaufbremsvorrichtung (21) und ggf. eine Feststellbremsvorrichtung (22) umfasst. Der Fahrzeuganhänger (1) kann mittels einer Anhängerkupplung (3) am Zugfahrzeug (2) an- und abgekuppelt werden. Das Zugfahrzeug (2) weist hierfür eine entsprechende Zugkupplung auf. Diese kann z.B. als Kugelkopfkupplung ausgebildet sein. Die Anhängerkupplung (3) weist hierfür z.B. eine entsprechende pfannenförmige Kugelaufnahme nebst Betätigungs- und Verriegelungseinrichtung auf. Ansonsten kann die Anhängerkupplung (3) in anderer Weise, z.B. als Sattelkupplung für einen als Sattelauflieger gestalteten Fahrzeuganhänger (1), ausgebildet sein.

Der Fahrzeuganhänger (1) umfasst ein Fahrzeugchassis (4) und ggf. einen Aufbau (61), z.B. Kasten,- Pritschen-und/oder Sitzaufbau. Das Fahrzeugchassis oder Chassis (4) kann ein oder mehrere Längsträger (5) und ggf. ein oder mehrere Querträger (6) sowie Achsböcke (14) umfassen. Es kann z.B. gemäß Figur 2, 10, 19 und 27 als Leiterrahmenchassis ausgebildet sein.

Der Fahrzeuganhänger (1), insbesondere das Chassis (4) kann eine Deichsel (7) umfassen, die in unterschiedlicher Weise ausgebildet sein kann. Am vorderen Deichselende ist die Anhängerkupplung (3) angeordnet. Die Deichsel (7) kann starr oder beweglich am Chassis (4) angeordnet sein.

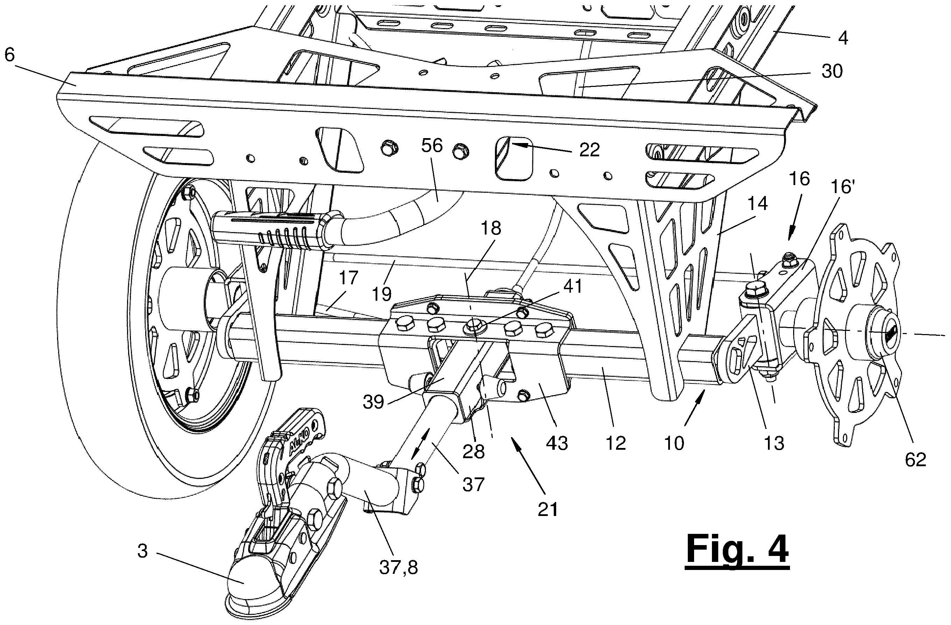

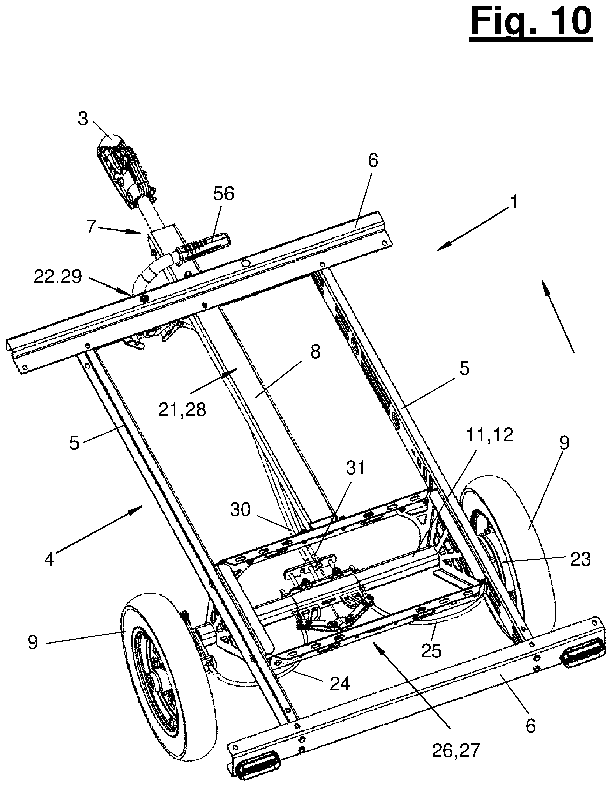

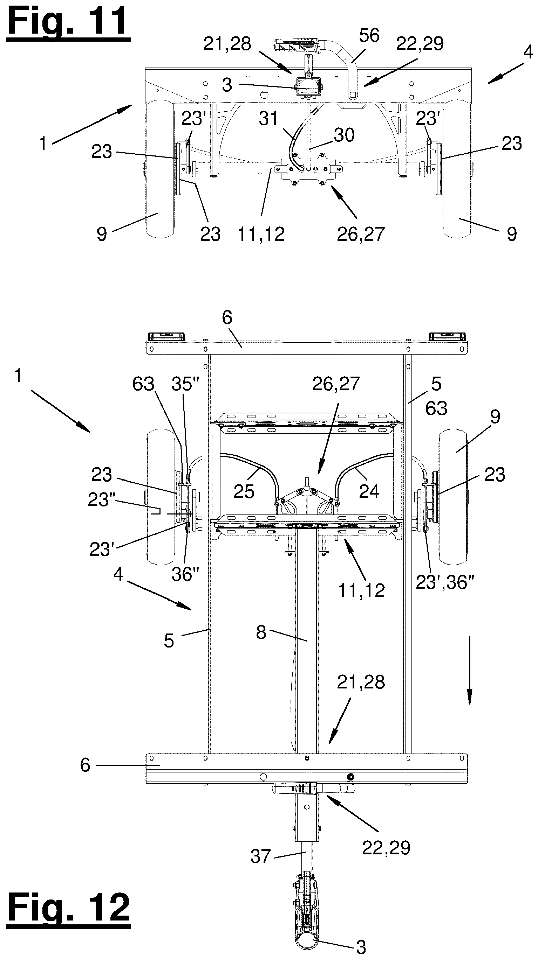

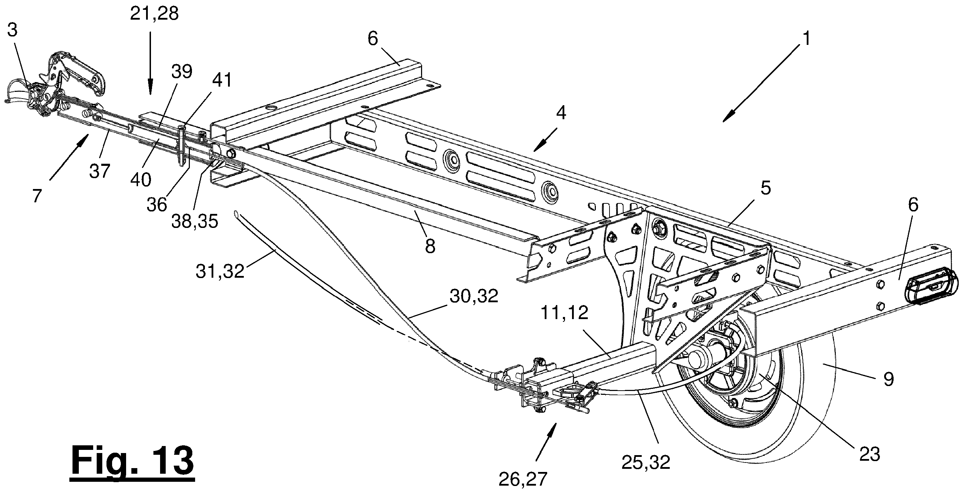

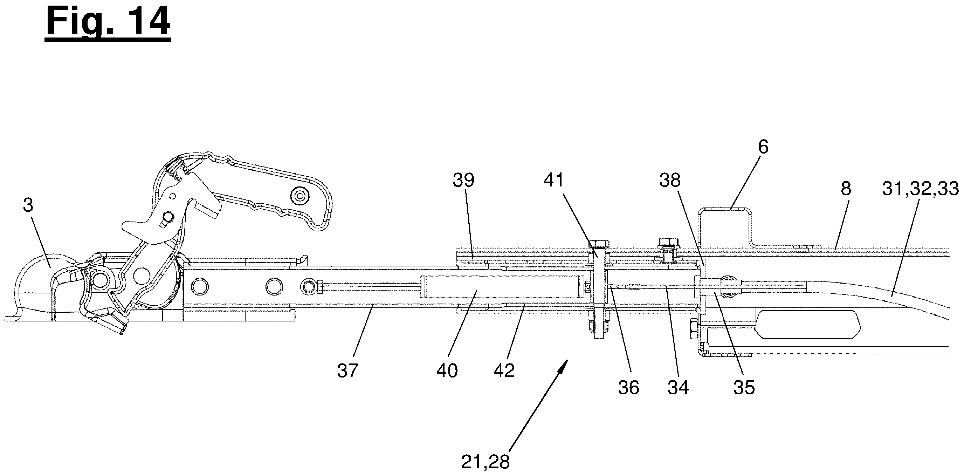

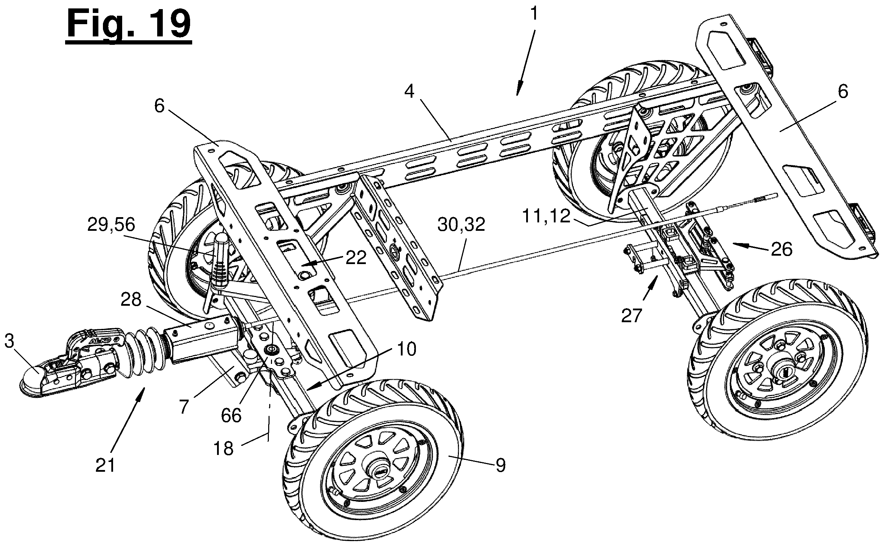

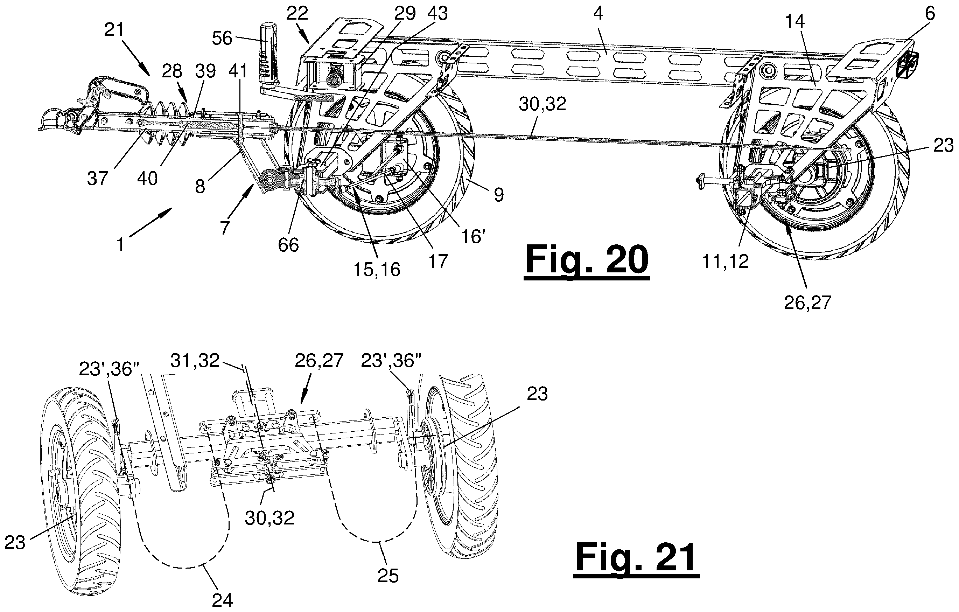

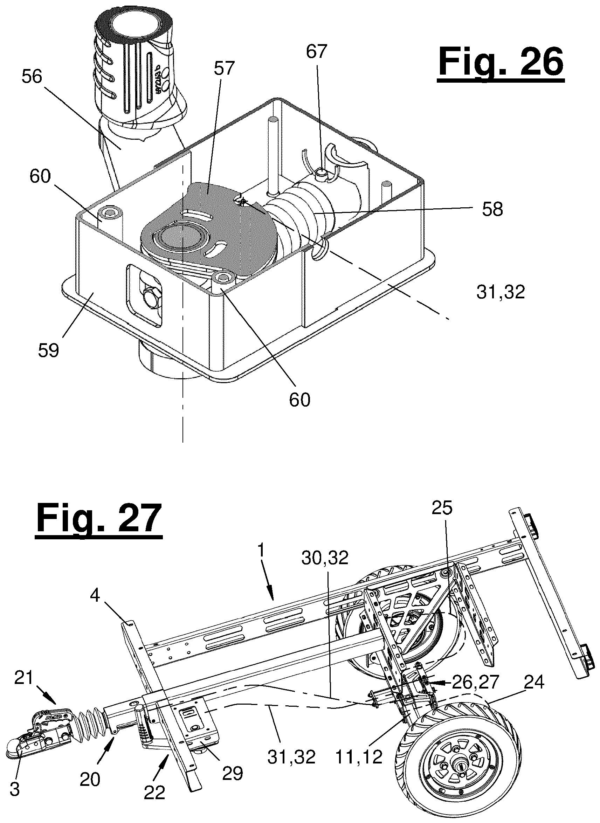

Der Fahrzeuganhänger (1) umfasst eine oder mehrere Fahrzeugachsen (10,11) in verschiedenen Varianten. Figur 1 bis 9 zeigen einen Fahrzeuganhänger (1) mit zwei oder mehr Fahrzeugachsen (10,11). Eine vordere Achse (10) kann z.B. als lenkbare Achse ausgebildet sein. Figur 10 bis 16 zeigen einen Fahrzeuganhänger (1) mit einer einzelnen Fahrzeugachse (11). In Figur 19 bis 21 ist eine dritte Variante eines Fahrzeuganhänger (1) mit zwei oder mehr Fahrzeugachsen (10,11) dargestellt. Figur 27 zeigt in einer vierten Variante einen Fahrzeuganhänger (1) mit einer einzelnen Fahrzeugachse (11).

Die Auflaufbremsvorrichtung (20) und die ggf. zusätzlich vorhandene Feststellbremsvorrichtung (22) können in unterschiedlicher Weise ausgebildet und an die unterschiedlichen Fahrzeugkonfigurationen angepasst sein.

In der Variante von Figur 1 bis 9 ist die vordere Achse (10) in der erwähnten Weise als lenkbare und bevorzugt ungebremste Fahrzeugachse ausgebildet. Am hinteren Chassisende befindet sich zumindest eine weitere Fahrzeugachse (11). Diese ist als gebremste Achse ausgebildet und weist Radbremsen (23) an den Fahrzeugrädern (9) auf. Der Fahrzeuganhänger (1) kann mehr als zwei Fahrzeugachsen (10,11) haben, wobei z.B. am hinteren Fahrezeugbereich eine Tandem- oder Trippelachse angeordnet ist.

Die Fahrzeugachsen (10,11) können in unterschiedlicher Weise ausgebildet sein. Sie sind z.B. als Radlenkerachsen mit einer Einzelradaufhängung gestaltet. Alternativ sind andere Achsgestaltungen möglich.

Die gezeigten Radlenkerachsen umfassen jeweils einen vorzugsweise starren Achskörper (12), der quer zur Fahrtrichtung und zur Chassislängsachse ausgerichtet ist und sich bevorzugt über die gesamte Fahrzeugbreite erstreckt. Dieser kann massiv oder wie in den dargestellten Ausführungsformen als hohles Achsrohr ausgebildet sein. An den stirnseitigen Enden des Achskörpers (12) sind Radschwinghebel (13) schwenkbar gelagert und über bevorzugt frei drehbare Naben (62) mit den Fahrzeugrädern (9) verbunden. Die Radschwinghebel (13) können in geeigneter Weise mit einer Federung verbunden sein, z.B. einer Gummifederung, Drehstabfederung, Luftfederung oder dgl..

Die Achskörper (12) sind an ihren stirnseitigen Endbereichen jeweils mittels Achsböcken (14) mit dem Chassis (4), insbesondere mit dessen Längsträgern (5) bevorzugt starr verbunden. Die bevorzugt plattenartigen Achsböcken (14) bestehen z.B. aus ebenen oder abgekanteten dünnen Blechen. Die Chassisteile können durch gelochte Formgebung und/oder Materialwahl oder dgl. als Leichtbauteile ausgebildet sein.

Die Bremsvorrichtung (20) umfasst mechanisch betätigbare Radbremsen (23) an zumindest einigen der Fahrzeugräder (9), welche mit bevorzugt als Bowdenzug (32) ausgebildeten Bremszügen (24,25) mechanisch betätigt werden können. Die Radbremsen (23) sind z.B. als Trommelbremsen, Scheibenbremsen oder dgl. ausgebildet.

Die Bremsvorrichtung (20) umfasst eine Auflaufbremsvorrichtung (21). Diese weist eine mit der Anhängerkupplung (3) verbindbare oder im Einbaufall verbundene Auflaufeinrichtung (28) und einen Betätigungsstrang auf. Der Betätigungsstrang umfasst einen auflaufbetätigten, mechanischen Bremskraftübertrager (30) und einen externen Bremskraftverteiler (27). Der mechanische Bremskraftübertrager (30) verbindet die Auflaufeinrichtung (28) mit dem Bremskraftverteiler (27) und den hier angeschlossenen Bremszügen (24,25). Der externe Bremskraftverteiler (27) ist getrennt und mit Distanz von der Auflaufeinrichtung (28) angeordnet.

Der Bremskraftübertrager (30) ist als Bowdenzug (32) ausgebildet. Dieser umfasst eine äußere druckfeste Hülle (33) und ein inneres zugfestes Zugseil (34) sowie jeweils endseitige Hüllenbefestigungen (35) und Zugseilbefestigungen (36). Diese sind an der Auflaufeinrichtung (28) und am Bremskraftverteiler (27) angeordnet und montiert.

Die Ausbildung und Verbindung mit der Auflaufeinrichtung (28) ist vorzugsweise derart gestaltet, dass bei der im Auflauffall von der Anhängerkupplung (3) induzierten Auflaufbewegung die Hüllenbefestigung (35) an der Auflaufeinrichtung (28) bewegt und verstellt wird. Die Hüllenbefestigung (35) wird in Richtung der Auflaufbewegung und bevorzugt linear bewegt. Die Zugseilbefestigung (36) kann dabei an der Auflaufeinrichtung (28) relativ ortsfest angeordnet und montiert sein. Sie wird bei der Auflaufbewegung nicht mitbewegt.

Der Bremskraftübertrager (30) ist am anderen Ende derart ausgebildet und mit dem Bremskraftverteiler (27) verbunden, dass die Hüllenbefestigung (35) am Bremskraftverteiler (27) relativ ortsfest montiert ist und die Zugseilbefestigung (36) beweglich angeordnet ist. Sie ist dabei mit den Bremszügen (24,25) für deren Betätigung verbunden. Dies kann in der nachfolgend erläuterten Weise über einen Bremskraftverstärker (26) erfolgen.

Die Auflaufeinrichtung(28) weist z.B. ein beim Auflaufen linear verschiebliches Auflaufrohr (37) und eine umgebende hülsenartige Führung (39) für das Auflaufrohr (37) auf. Das Auflaufrohr (37) ist mit der Anhängerkupplung (3) verbindbar oder verbunden. Die im Gespannbetrieb beim Bremsen auftretenden Auflaufbewegungen des Fahrzeuganhängers (1) auf das Zugfahrzeug (2) werden auf das Auflaufrohr (37) übertragen und verschieben dieses entgegen der Vorwärts-Fahrtrichtung, wodurch die Hüllenbefestigung (35) an der Auflaufeinrichtung (28) in gleicher Richtung mitbewegt wird und die Auflaufbremsvorrichtung (21) und die angeschlossenen Radbremsen (23) betätigt werden. Statt des Auflaufrohrs kann ein anderes bevorzugt linear beweglich geführtes und gerades Auflaufelement, z.B. eine Auflaufstange, eingesetzt werden. Die nachfolgenden Ausgestaltungen gelten für das andere Auflaufelement entsprechend.

Bei der Ausführungsform von Figur 1 bis 9 ist die Deichsel (7) zwischen dem Auflaufrohr (37) und der Anhängerkupplung (3) angeordnet und überträgt die Auflaufkräfte. Der Deichselholm (8) kann einteilig oder mehrteilig ausgebildet sein. Der Deichselholm (8) kann eine gerade oder gebogene Form haben.

In der Variante von Figur 1 bis 9 hat der Deichselholm (8) eine z.B. zweifach gebogene und schräg aufwärts gerichtete Form, wobei das hintere und untere Holmende mit dem Auflaufrohr (37) starr oder beweglich verbunden ist und das vordere und obere Holmende mit der Anhängerkupplung (3) fest verbunden ist. Die Deichsel (7) kann auch eine liegende und seitlich gebogene Ausbildung und Anordnung haben. Dies kann von der Gestaltung und lokalen Anordnung der Zugkupplung des Zugfahrzeugs (2) abhängen. Der Deichselholm (8) kann auch verstellbar ausgebildet sein. Die Höhenposition und/oder Seitenposition der Anhängerkupplung (3) kann bedarfsweise geändert und an unterschiedliche Lagen der Zugkupplung von Zugfahrzeugen (2) angepasst werden.

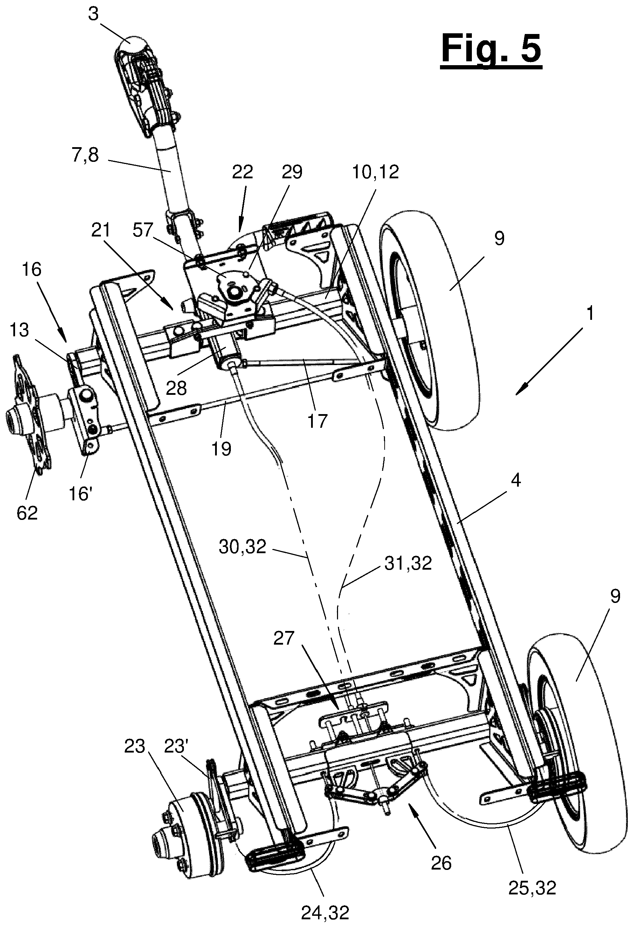

Die Hüllenbefestigung (35) des auflaufbetätigten Bremskraftübertragers (30) ist am Auflaufrohr (37), insbesondere an dessen hinterem Ende, montiert. Figur 5 bis 7 verdeutlichen diese Ausbildung und Anordnung. Das Auflaufrohr (37) kann rückseitig durch einen fest montierten Rohrverschluss (38), z.B. in Form eines Deckels, verschlossen sein. Die Hüllenbefestigung (35) ist z.B. außenseitig an diesem Rohrverschluss (38) montiert. Die Auflaufbewegung des Auflaufrohrs (37) wird dadurch in eine entsprechende Bewegung und Verstellung der Hülle (33) des Bremskraftübertragers (30) umgesetzt.

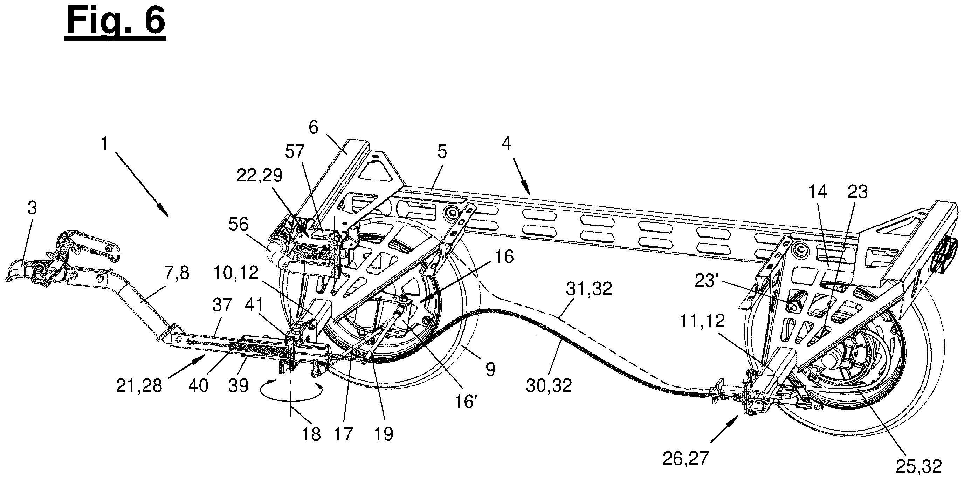

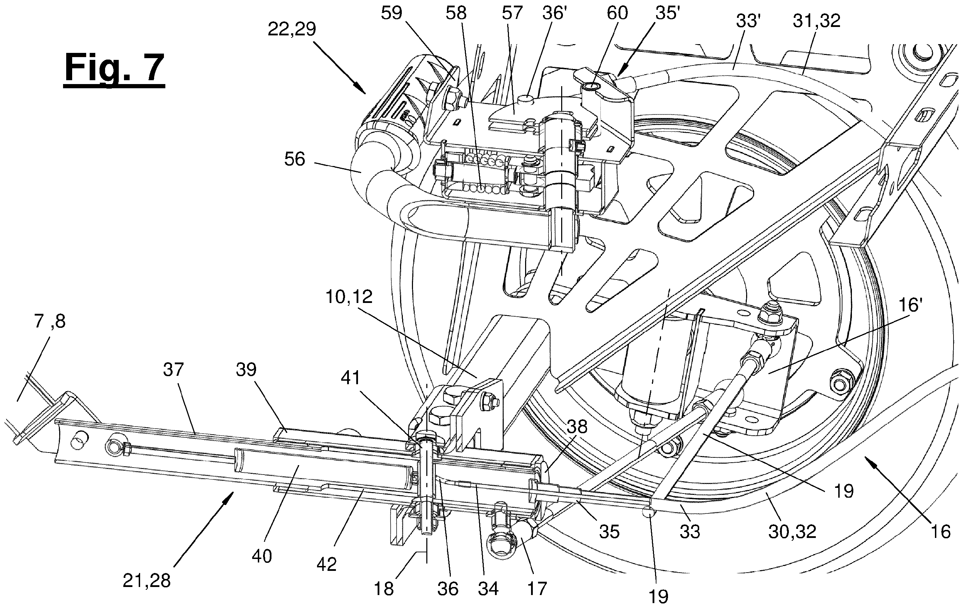

Die Zugseilbefestigung (36) ist im hohlen Innenraum des Auflaufrohrs (37) an einem Stützmittel (41) montiert, welches mit der hülsenartigen Führung (39) verbunden ist. Das Stützmittel (41) ist dadurch relativ ortsfest gegenüber den Auflaufbewegungen angeordnet. Eine Auflaufbewegung wird somit nicht auf das Stützmittel (41) übertragen. Das Stützmittel (41) ist z.B. als Stützbolzen ausgebildet, der das Auflaufrohr (37) an gegenüber liegenden axialen Ausschnitten (42) im Rohrmantel durchsetzt. Figur 6 und 7 verdeutlichen diese Anordnung.

Die Auflaufeinrichtung (28) weist einen Dämpfer (40) für die Auflaufbewegungen auf. Der Dämpfer kann federbelastet sein. Er kann z.B. als fluidischer Dämpfer, insbesondere als hydraulischer Dämpfzylinder, oder in anderer Weise ausgebildet sein. Der Dämpfer (40) ist z.B. gemäß Figur 6 und 7 im Inneraum des Auflaufrohrs (37) angeordnet und erstreckt sich längs der Rohrachse. Das vordere Dämpferende ist durch einen Beschlag mit dem Auflaufrohr (37) fest verbunden. Das hintere Dämpferende ist mit dem Stützmittel (41) fest verbunden. Bei einer Auflaufbewegung wird der Dämpfer (40) zusammengeschoben. Nach Beendigung des Auslaufens und der Auflaufbremsung kann die bevorzugt im Dämpfer (40) integrierte Feder den Dämpfer (40) wieder strecken und dadurch das hohle Auflaufrohr (37) wieder ausfahren.

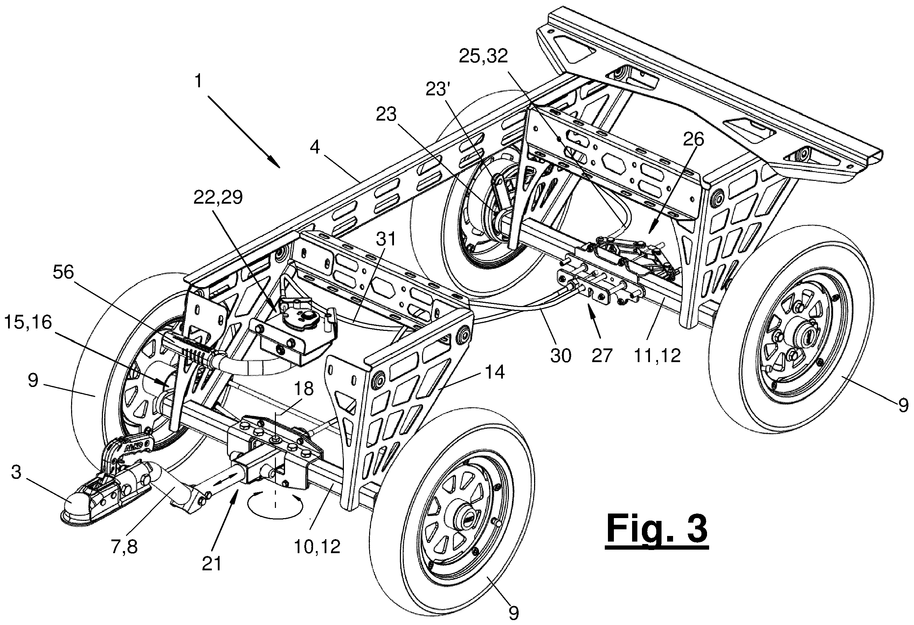

In der Ausführungsform von Figur 1 bis 9 ist die vordere Achse (10) als lenkbare Achse ausgebildet. Die Auflaufeinrichtung (28) ist als Teil einer Lenkeinrichtung (15) für den Fahrzeuganhänger (1) ausgebildet und ist mit einer Lenkstange (17) verbindbar oder verbunden. In der Einbaulage am Straßenfahrzeug (1) ist dabei die Auflaufeinrichtung (28) mit ihrer hülsenartigen Führung (3) und dem Auflaufrohr (37) um eine aufrechte Schwenkachse (18) schwenkbar an der lenkbaren Achse (10) angeordnet. Figur 3 bis 7 verdeutlichen diese Anordnung und Ausbildung.

Der Achskörper (12) ist im mittleren Bereich in zwei Hälften unterteilt, die im Trennbereich voneinander in ihrer Axialrichtung beabstandet sind. Dieser Bereich wird von einem manschettenartigen Stützbeschlag (43) überbrückt, der mit den beiden Enden der Achskörperteile fest verbunden ist. Die Auflaufeinrichtung (28) ist in diesem Zwischenraum oder Abstand zwischen den Achskörperteilen angeordnet und durchsetzt z.B. den Stützbeschlag (43). Sie ist mit dem Stützbeschlag (43) drehbar verbunden. Die Verbindung kann über den aufrechten Stützbolzen (41) erfolgen. Die Auflaufeinrichtung (28), insbesondere die Führung (39), ist dadurch schwenkbar an der Fahrzeugachse (10) gelagert, wobei die aufrechte Schwenkachse (18) z.B. durch den aufrechten Stützbolzen (41) verläuft. Dieser kann zugleich die Lagerachse bilden.

Die Lenkeinrichtung (15) ist in der Ausführungsform von Figur 1 bis 9 als Achsschenkellenkung (16) ausgebildet. Sie kann alternativ anders, z.B. als Drehschemellenkung mit Drehung des Achskörpers oder dgl. ausgeführt sein.

Die Achsschenkellenkung (16) umfasst schwenkbar um eine aufrechte Achse an den Radschwinghebeln (13) gelagerte Achsschenkel (16'). Die z.B. einzelne Lenkstange (17) ist am einen Ende mit dem rückwärtigen, über die Schwenkachse (18) hinausragenden Teil der Auflaufeinrichtung (28), insbesondere der Führung (39), gelenkig verbunden. Das andere Lenkstangenende ist mit einem der lenkbaren Achsschenkel (16') gelenkig verbunden. Ferner sind die Achsschenkel (16') untereinander direkt durch eine Koppelstange (19) quer verbunden.

Eine von der Anhängerkupplung (3) induzierte Schwenkbewegung der Auflaufeinrichtung (28) um die Schwenkachse (18) bewirkt dadurch eine entsprechende Drehbewegung des einen Achsschenkels (16'), wobei die Koppelstange (19) eine synchrone Schwenk- und Lenkbewegung beider Achsschenkel (16') sicherstellt. Durch die vorbeschriebene Intergration der Auflaufeinrichtung (28) in den Achskörper (12) befinden sich die Achsschenkel (16') und die Auflaufeinrichtung (28) im Wesentlichen auf gleicher Höhe. Die Lenkstange (17) kann eine im Wesentlichen horizontale Erstreckung haben.

Die Auflaufbremsvorrichtung (21) kann einen Bremskraftverstärker (26) aufweisen. Dieser kann im Betätigungsstrang angeordnet sein. Er ist vorzugsweise am Bremskraftverteiler (26) angeordnet. In der Einbaulage sind der Bremskraftverteiler (27) und ggf. der Bremskraftverstärker (26) bevorzugt an einer Fahrzeugachse (11), insbesondere an deren Achskörper (12), angeordnet und montiert. Sie können alternativ am Chassis (4) und ggf. distanziert von einer Fahrzeugachse (11) montiert und abgestützt sein.

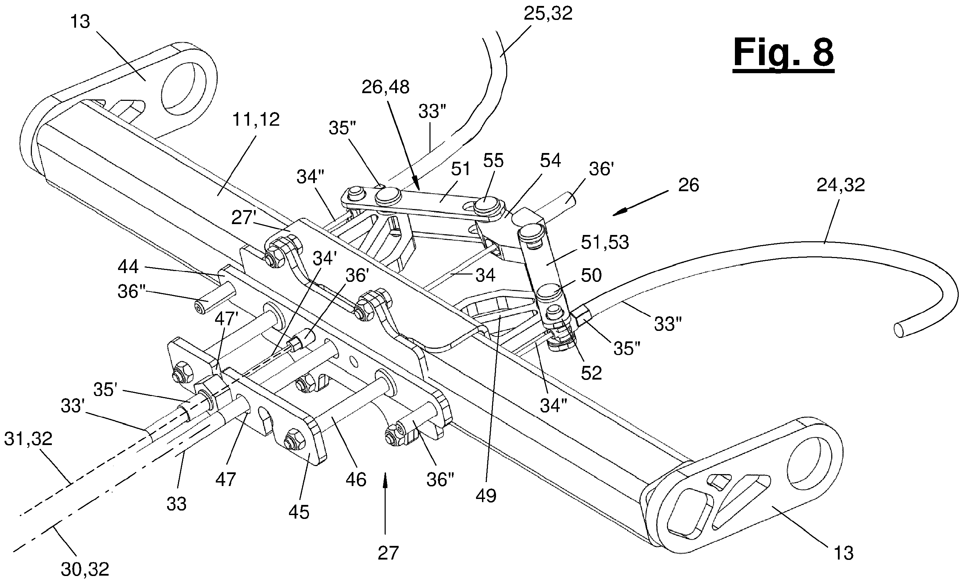

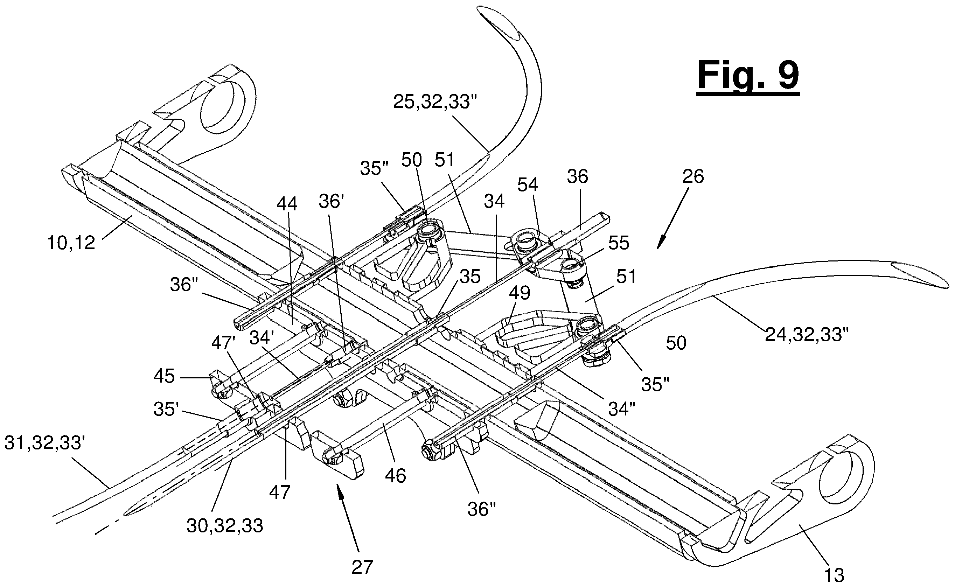

Der Bremskraftverstärker (26) ist bevorzugt dem Bremskraftverteiler (27) zugeordnet, insbesondere dort integriert und befindet sich z.B. an der Rückseite des Achskörpers (12). Figur 8 und 9 verdeutlichen diese Ausbildung.

Der Bremskraftverteiler (27) umfasst z.B. eine bewegliche Stellbrücke (44), an der die Zugseilbefestigungen (36") der Bremszüge (24,25) montiert sind. Die Bremszüge (24,25) sind als Bowdenzüge (32) mit einer äußeren druckfesten Hülle (33"), zugfesten Zugseilen (34") und Zugseilbefestigungen (36") sowie Hüllenbefestigungen (35") ausgebildet.

Die Stellbrücke (44) ist z.B. an der zur Auflaufeinrichtung (28) weisenden Seite des Achskörpers (12) angeordnet und ist auf Stützbolzen (46) in Chassislängsrichtung beweglich geführt. Die Stützbolzen (46) sind am Achskörper (12) oder an einem am Achskörper (12) montierten manschettenartigen Gestell (27') des Bremskraftverteilers (27) befestigt und ragen hiervon in Richtung zur Auflaufeinrichtung (28) weg. An den freien Enden der geraden Stützbolzen (46) ist ein quer zur Chassislängsachse verlaufender Stützsteg (45) gestellfest angeordnet und befestigt.

Wie Figur 9 im Schnitt verdeutlicht, erstreckt sich der Bowdenzug (32) des Bremskraftübertragers (30) durch eine Durchgangsöffnung (47) im Stützsteg (45) und durch die Stellbrücke (44) hindurch. Die Hüllenbefestigung (35) des Bremskraftübertragers (30) ist in geeigneter Weise am Achskörper (12) oder am besagten Gestell (27') des Bremskraftverteilers (27) montiert. Die Zugseilbefestigung (36) ist in den gezeigten Ausführungsbeispielen mit dem Bremskraftverstärker (26) verbunden.

Der Bremskraftverstärker (26) umfasst z.B. ein Lenkergetriebe (48) mit einer Übersetzung, welches z.B. als Kniehebelgetriebe ausgebildet sein kann. Das Lenkergetriebe (48) ist mittels eines geteilten Traggestells (49) am Achskörper (12) oder am Gestell (27') montiert und abgestützt. Der Bremskraftverstärker (26) kann auch anders ausgebildet und an anderer Stelle im Betätigungsstrang angeordnet sein.

Der Bremskraftverstärker (26) wird über die Zugseilbefestigung (36) des Bremskraftübertragers (30) antriebseitig betätigt und wirkt abtriebseitig auf die Hüllenbefestigungen (35") der Bremszüge (24,25) ein. Hierdurch wird bei einer Betätigung der Auflaufeinrichtung (28) die Hülle (33) des Bremskraftübertragers (30) in Auflaufrichtung bewegt und verstellt, wobei sie seitlich ausweicht. Dies führt zu einer entsprechenden Zugbewegung am Zugseil (34) und an der Zugseilbefestigung (36). Diese Bewegung wird mittels der Übersetzung in eine größere Stellbewegung der Hüllenbefestigungen (35") und der Hüllen (33") der Bremszüge (24,25) und zu einer entsprechenden Betätigung der angeschlossenen Radbremsen (23) umgesetzt. Die Hüllenbefestigungen (35") und die Hüllen (33") werden dabei zu der jeweils zugeordneten Radbremse (23) hinbewegt.

Das Lenkergetriebe (48) weist in den gezeigten Ausführungsformen jeweils schwenkbare Lenkerarme (51) auf, die beidseits des Bremskraftübertragers (30) angeordnet und mittels des Traggestells (49) und Drehlagern (50) relativ ortsfest am Achskörper (12) oder an anderer Stelle des Chassis (4) abgestützt sind. Die Drehlager (50) sind außermittig an den Lenkerarmen (51) angeordnet, wodurch die Lenkerarme (51) sich in einen kurzen Armteil (52) und einen langen Armteil (53) aufgliedern. Durch diese Längenunterschiede wird die Übersetzung gebildet. Die beiden längeren Armteile (53) sind mit einem zwischen ihnen angeordneten Koppelelement (54) über ein drehbares und längs verschiebliches Koppellager (55) beweglich verbunden. Am Koppelelement (54) ist die zwischen den Lenkerarmen (51) befindliche Zugseilbefestigung (36) montiert.

Die beiden kürzeren Armteile (52) sind jeweils mit einer Hüllenbefestigung (35') des zugeordneten Bremszugs (24,25) verbunden. Die Zugseile (34") der Bremszüge (24,25) erstrecken sich durch den Achskörper (12) und sind in der vorerwähnten Weise mit ihren Zugseilbefestigungen (36") an der Stellbrücke (44) montiert.

Eine Zugbewegung des Zugseils (34) und der Zugseilbefestigung (36) führt zu einer Schwenkbewegung der Lenkerarme (51), wobei durch deren Übersetzung die Hüllenbefestigungen (35') zu den Radbremsen (23) hin verschoben werden und die Hüllen (33") der Bremszüge (24,25) mit einer entsprechend größeren Kraft verstellt werden und die Radbremsen (23) betätigen. Am anderen Ende der Bremszüge (24,25) sind die Hüllenbefestigungen (35") relativ ortsfest an den Radbremsen (23) abgestützt, wobei die Zugseilbefestigungen (36") mit einem entsprechenden Radbremsbetätiger z.B. einem Spannschloss oder dgl., verbunden sind. Der Radbremsbetätiger kann eine Kraftverstärkung umfassen.

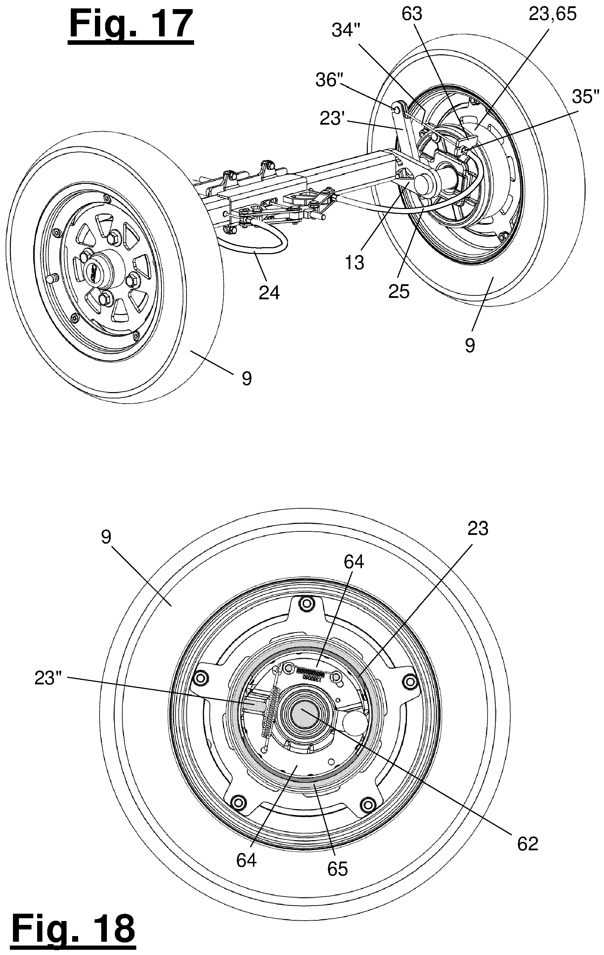

In den gezeigten Ausführungsformen von Figur 1 bis 13 weist der Radbremsbetätiger jeweils einen schwenkbaren Bremshebel (23') mit einer Bremswelle (23") auf, die bei der Drehung z.B. die Bremsbacken (64) einer Trommelbremse spreizt und an die rotierende Bremstrommel (65) anpresst. Die Zugseilbefestigung (36") ist mit dem freien Hebelende verbunden, wobei der am anderen Hebelende drehbar über die Bremswelle gelagerte Bremshebel (23') für eine Übersetzung und Bremskraftverstärkung sorgt. Die drehende Bremswelle (23") kann auch andere Radbremselemente betätigen. Die Hüllenbefestigungen (35") der Bremszüge (24,25) können jeweils an einem chassisfesten oder bremsfesten und stationären Stützteil (63) montiert sein. Figur 17 und 18 verdeutlichen die Ausbildung näher.

Die Bremsvorrichtung (20) umfasst auch eine Feststellbremsvorrichtung (22), die ebenfalls mit den Bremszügen (24,25) verbunden ist. Die Feststellbremsvorrichtung (22) weist einen z.B. manuell bedienbaren Bremskraftbetätiger (29) und einen ebenfalls als Bowdenzug (32) ausgebildeten mechanischen Bremskraftübermittler (31) auf. Dieser ist am einen Ende mit dem Bremskraftbetätiger (29) und und am anderen Ende mit dem Bremskraftverteiler (27) verbunden.

Der Bremskraftübermittler (31) und der auflaufbetätigte Bremskraftübertrager (30) sind in den gezeigten Ausführungsbeispielen jeweils getrennt voneinander und eigenständig mit dem Bremskraftverteiler (27) verbunden und dort montiert.

Der Bremskraftübermittler (31) ist derart ausgebildet und mit dem Bremsbetätiger (29) verbunden, dass bei einer Betätigung der Feststellbremsvorrichtung (22) die Zugseilbefestigung (36') am Bremsbetätiger (29) bewegt und verstellt wird. Am anderen Ende des Bremskraftübermitttlers (31) ist die Hüllenbefestigung (35) an dem Stützsteg (45) angeordnet und relativ ortsfest montiert. Der Stützsteg (45) ist z.B. parallel zum Achskörper (12) ausgerichtet und ist von diesem in Richtung zur Auflaufeinrichtung (22) distanziert. Das Zugseil (34') erstreckt sich durch den Stützsteg (45) in Richtung zum Achskörper (12), wobei die Zugseilbefestigung (36') an der beweglichen Stellbrücke (44) angeordnet und montiert ist.

Bei einer Betätigung der Feststellbremsvorrichtung (22) und einer Hüllenverstellung wird das Zugseil (34') gespannt und zieht die Stellbrücke (44) sowie die hieran montierten Zugseile (34") der Bremszüge (24,25) an, wodurch die Radbremsen (23) entsprechend betätigt werden. Durch diese Ausbildung werden beim Feststellbremsen die Zugseilbefestigung (36') des Bremskraftübermittlers (31) und die Zugseilbefestigung (36") der Bremszüge (24,25) verstellt und betätigt.

Bei dieser Ausgestaltung bewegen und verstellen die Auflaufbremsvorrichtung (21) und die Feststellbremsvorrichtung (22) unterschiedliche Bowdenzugteile (33",34") der Bremszüge (24,25).

Figur 3 bis 7 verdeutlichen eine Ausbildung des Bremsbetätigers (29). Dieser ist am vorderen Bereich des Chassis (4), z.B. an einem vorderen Querträger (6), in ergonomisch günstiger Lage montiert. Der Bremsbetätiger (29) umfasst einen um eine aufrechte Achse schwenkbaren Hebel (56), insbesondere einen Handbremshebel, der mit einer Spannscheibe (57) und einer Feder (58), insbesondere einer Totpunktfeder, verbunden ist. Die Zugseilbefestigung (36') des Bremskraftübermittlers (31) ist an der mit dem Handbremshebel (56) drehbaren Spannscheibe (57) montiert. Die Hüllenbefestigung (35') ist an einem Traggestell (59) des Bremsbetätigers (29) ortsfest und chassisfest montiert. Bei der ersten Variante von Figur 1 bis 9 ist der Handbremshebel (56) über eine aufrechte Welle mit der Spannscheibe (57) drehfest gekoppelt, wobei eine Drehbewegung von Handbremshebel (56) und Spannscheibe (57) in eine Zugbewegung am Zugseil (34') des Bremskraftübermittlers (31) umgesetzt wird.

Die Feder (58) ist mit dem Handbremshebel (56), insbesondere mit dessen Welle, gekoppelt. In der Ausbildung als Totpunktfeder unterstützt sie nach Überschreiten des Totpunkts die Handkraft bei der Betätigung der Feststellbremsvorrichtung (22). Auf der anderen Seite des Totpunkts hält sie die Spannscheibe (57) in der entlasteten Ausgangsstellung des Bremskraftübermittlers (31). Anschläge (60) am Traggestell (59) begrenzen in beiden Richtungen die Drehbewegungen der Spannscheibe (57). Die Spannscheibe (57) weist mit Abstand zur Drehachse der Welle des Handbremshebels (56) einen z.B. kreisbogenförmigen äußeren Umfang und eine Anlagefläche für das Zugseil (34') auf. Durch einen veränderlichen Bogenradius kann auch eine Übersetzung realisiert sein.

Bei der zweiten Variante eines einachsigen Fahrzeuganhängers (1) von Figur 10 bis 16 ist nur die eine gebremste und mit ihrem Achskörper (12) starr am Chassis (4) montierte Fahrzeugachse (11) vorhanden. Der Fahrzeuganhänger (1) ist mit einer Auflaufbremsvorrichtung (21) und einer Feststellbremsvorrichtung (22) ausgestattet, wobei der auflaufbetätigte Bremskraftübertrager (30) und der feststellbetätigte Bremskraftübermittler (31) wie bei der ersten Variante als Bowdenzüge (32) ausgebildet sind. Die Ausbildung und Anordnung des Bremskraftverteilers (27) und eines evtl. vorhandenen Bremskraftverstärkers (26) sind die gleichen wie bei der ersten Variante.

Der Fahrzeuganhänger (1) der zweiten Variante weist eine andere Deichsel (7) und eine andere Auflaufeinrichtung (28) als bei der ersten Variante auf.

Die Deichsel (7) ist als starre Deichsel ausgebildet und ist mit ihrem geraden, in Fahrtrichtung erstreckten und vorzugsweise profilierten oder hohlen Deichselholm (8) starr und ortsfest am Chassis (4), insbesondere am vorderen Querträger (6), montiert.

Bei dieser Ausführungsform ist das Auflaufrohr (37) der Auflaufeinrichtung (28) am vorderen freien Ende direkt mit der Anhängerkupplung (3) verbunden. Es ragt dabei nach vorn aus dem Deichselholm (8). Die hülsenartige Führung (38) ist starr und ortsfest am Deichselholm (8) montiert. Dies erfolgt z.B. mittels des vorbeschriebenen Stützmittels (41), insbesondere des Stützbolzens. Dieser durchsetzt auch den Deichselholm (8) und ist vorzugsweise und mit Abstand vor dem Querträger (6) und auch mit Abstand hinter dem vorderen Deichselholmende angeordnet.

Die Anordnung und Montage der Hüllenbefestigung (35) und der Zugseilbefestigung (36) sowie die Anordnung und Ausbildung des Dämpfers (40) können die gleiche wie bei der ersten Variante sein. Das gerade Auflaufrohr (37) kann gegenüber der ersten Variante verlängert sein und ist an seinem freien Ende direkt mit der Anhängerkupplung (3) fest verbunden.

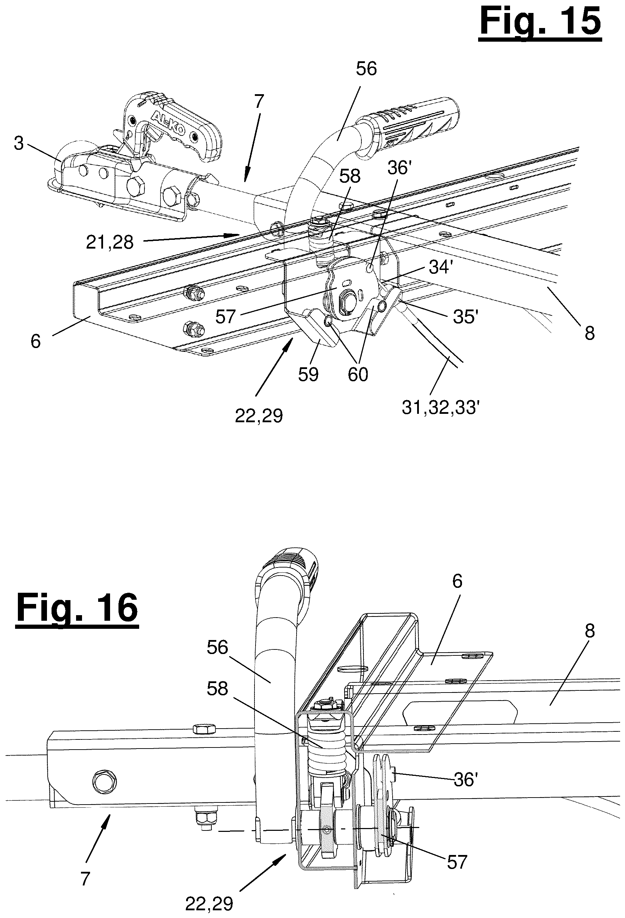

Figur 15 und 16 verdeutlichen die Ausbildung und Anordnung des Bremsbetätigers (29). Dieser ist ähnlich wie bei der ersten Variante ausgebildet, wobei er um 90° gedreht am vorderen Querträger (6) angeordnet und befestigt ist. Die Drehachse des Handbremshebels (56) und seiner Welle ist um 90° in eine liegende bzw. horizontale Lage gedreht. Dementsprechend haben die Spannscheibe (57) und die Feder (58) eine ebenfalls gedrehte Anordnung und Ausrichtung. Konstruktiv und funktional kann der Bremsbetätiger (29) der zweiten Variante genauso wie bei der ersten Variante ausgebildet sein.

Figur 19 bis 21 verdeutlichen eine weitere Variante des Fahrzeuganhängers (1) und der Bremsvorrichtung (20) umfassend eine Auflaufbremsvorrichtung (21) und eine Feststellbremsvorrichtung (21). Der Fahrzeuganhänger (1) weist wie bei der vorbeschriebenen ersten Variante von Figur 1 bis 9 zwei oder mehr Fahrzeugachsen (10,11) auf, wobei eine vordere Achse (10) z.B. als lenkbare Achse ausgebildet sein kann. Ferner ist die Auflaufeinrichtung (28) Teil einer Lenkeinrichtung (15) für den Fahrzeuganhänger (1).

Die Auflaufeinrichtung (28) mit Auflaufrohr (37), Rohrverschluss (38) und dortiger Hüllenbefestigung (35) sowie der Bremsübertrager (30) können wie in der ersten Variante ausgebildet sein. Der Bremsübertrager (30), insbesondere Bowdenzug (32) ist der Übersicht halber als gerades Element ohne den vorhandenen Anschluss am Bremskraftverteiler (27) dargestellt.

Im Unterschied zur ersten Variante ist die Auflaufeinrichtung (28) am vorderen Ende einer Deichsel (7) angeordnet und befindet sich zwischen der Anhängerkupplung (3) und der Deichsel (7). Die z.B. abgekröpfte Deichsel (7) kann mehrteilig und verstellbar ausgebildet sein. Die Auflaufeinrichtung (28) kann an einem schräg aufragenden Deichselholm (8) endseitig angeordnet sein.

Die Deichsel (7) ist mittels eines eigenen Schwenklagers (66) um die aufrechte Schwenkachse (18) schwenkbar an der lenkbaren Achse (10) angeordnet. Der Achskörper (12) kann wie bei der ersten Variante im mittleren Bereich in zwei Hälften unterteilt sein, die im Trennbereich voneinander in ihrer Axialrichtung beabstandet sind, wobei dieser Bereich von einem manschettenartigen Stützbeschlag (43) überbrückt wird. An diesem ist das Schwenklager (66) angeordnet.

Auch die Achsschenkellenkung (16) kann analog zur vorbeschriebenen ersten Variante ausgebildet sein, wobei in Figur 19 bis 21 die Deichsel (7) mit der Lenkstange (17) und dem Achsschenkel (16') verbunden ist.

Die Feststellbremseinrichtung (22) kann ähnlich wie bei der ersten Variante von Figur 1 bis 9 ausgebildet und an der Frontseite des Chassis (4) angeordnet sein, wobei der Bremskraftübermittler (31) nicht dargestellt ist. Der Bremsbetätiger (29) der weiteren Variante ist in Figur 26 näher dargestellt.

Der Bremsbetätiger (29) ist in der weiteren Variante von Figur 19 bis 21 mit einer Spannscheibe (57) und einer Feder (58) in liegender Anordnung und aufrechter Welle des ebenfalls aufrechten Handbremshebels (56) ausgebildet. Die Totpunktfeder (58) kann eine Federsicherung (67) mit einem Splint umfassen, welcher bei der Montage gezogen werden kann, wenn die Feststellbremseinrichtung (21) angeschlossen ist. Die Federsicherung (67) kann auch bei den vorbeschrieben Varianten des Bremsbetätiger (29) eingesetzt werden.

Das Traggestell (59) ist eigenständig und z.B. als Gehäuse ausgebildet, was die Montage an beliebiger Stelle des Chassis ermöglicht. Ansonsten kann der Bremsbetätiger (29) die gleiche Ausbildung und Funktion wie in der ersten Variante haben.

Bei der weiteren Variante kommen Bremskraftverstärker (26) und Bremskraftverteiler (27) zum Einsatz, welche die gleiche Grundausbildung und Funktion wie bei den ersten Varianten von Figur 1 bis 13 haben, wobei die Stellbrücke (44), der Stützsteg (45) und das Lenkergetriebe (48) im Detail anders ausgebildet sind. Der Bremskraftübertrager (30) und der Bremskraftübermittler (31) sind gemeinsam am Bremskraftverstärker (26) und Bremskraftverteiler (27) angeschlossen, wobei sie bei der weiteren Variante zentral und übereinander angeordnet sind.

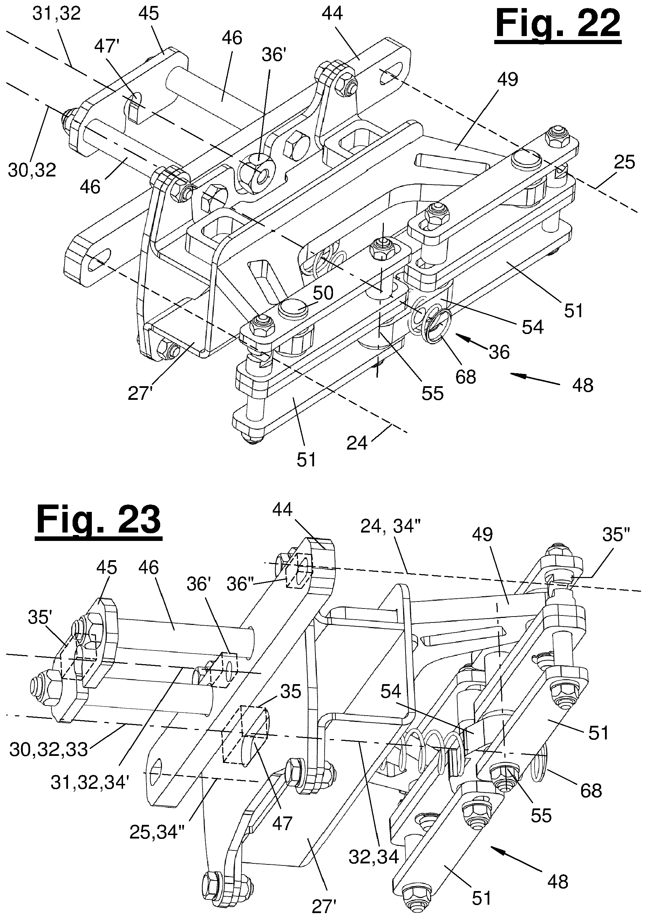

Figur 22 und 23 sowie Figur 24 und 25 zeigen dabei verschiedene Ausführungsformen des Bremskraftverstärkers (26) und des Bremskraftverteilers (27).

Bei der Ausführungsform von Figur 22 und 23 ist der Bremskraftübermittler (31) durch den gestellfesten Stützsteg (45) und die Durchgangsöffnung (47') zur beweglichen Stellbrücke (44) geführt, wobei die Zugseilbefestigung (36') an der Stellbrücke (44) und die Hüllenbefestigung (35') an dem Stützsteg (45) jeweils zentral angeordnet und montiert sind. Der Bremskraftübertrager (30) ist ebenfalls zentral und unterhalb des Bremskraftübermittlers (31) angeordnet, wobei der Bremskraftübertrager (30) sich unterhalb des Stützstegs (45) und der beweglichen Stellbrücke (44) sowie durch eine Durchgangsöffnung (47) im Gestell (27') und im Achskörper (12) erstreckt. Die Hüllenbefestigung (35) ist am Gestell (27') oder am Achskörper (12) montiert. Die nicht dargestellte Zugseilbefestigung (36) des Bremskraftübertragers (30) ist an einem Koppelelement (54) des Lenkergetriebes (48) montiert, wobei eine Feder (68) die Rückstellung des entlasteten Bremskraftübertragers (30) und der Bremszüge (24,25) bewirkt.

Das Koppelelement (54) ist wie bei der ersten Variante an den Lenkerarmen (51) des Lenkergetriebes (48) montiert. Das Koppelelement (54) ist bei der weiteren Variante jedoch tiefer angeordnet, weshalb die Lenkerarme (51) eine größere Höhe als bei der vorbeschriebenen ersten Variante haben. Ansonsten sind die Lenkerarme (51) mit verschieden langen Armteilen (52,53) und dem Koppellager (55) in der vorbeschriebenen Weise ausgebildet.

Die Bremszüge (24,25) und ihre Hüllenbefestigungen (35") an den Lagerarmen (51) sowie ihre Zugseilbefestigungen (36") sind mit Abstand oberhalb des Koppelelements (54) und auf Höhe der beweglichen Stellbrücke (44) angeordnet.

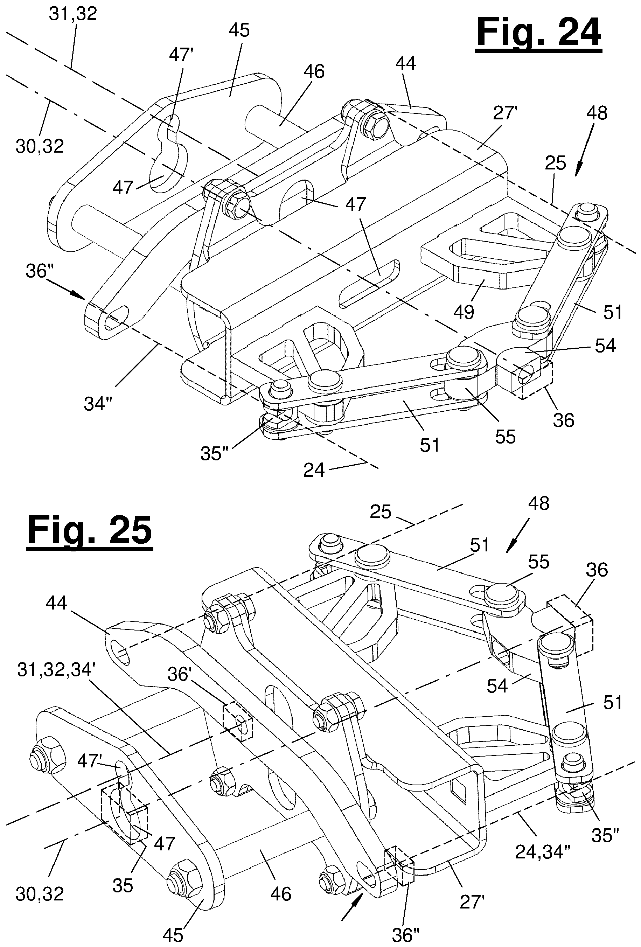

Die zweite Ausführungsform des Bremskraftverstärkers (26) und des Bremskraftverteilers (27) von Figur 24 und 25 baut flacher als die vorbeschriebene erste Ausführungsform bei ansonsten gleicher Funktion des Lenkergetriebes (48). Der gestellfeste Stützsteg (45) hat zwei Durchgangsöffnungen (47,47') übereinander für die zentral und mit geringem Abstand übereinander angeordneten Bremskraftübertrager (30) und Bremskraftübermittler (31). Hier sind auch die Hüllenbefestigungen (35,35') angeordnet. Die bewegliche Stellbrücke (44) kann eine nach oben gewölbte, bogenartige Form haben, so dass der Bremskraftübertrager (30) darunter verlaufen kann und sich durch Durchgangsöffnungen (47) im Gestell (27') und im Achskörper (12) zu dem Lenkergetriebe (48) und dem Koppelelement (54) erstrecken kann. Die Hüllenbefestigungen (35") und die Zugseilbefestigungen (36") der Bremszüge (24,25) sind wie bei der ersten Variante von Figur 1 bis 13 auf Höhe des Koppelelements (54) angeordnet. Die Feder (68) kann ebenfalls vorhanden sein. Die Lenkerarme (51) können eine geringere Höhe als bei der ersten Ausführungsform von Figur 22 und 23 haben.

Figur 27 zeigt in einer zusätzlichen Variante einen einachsigen Fahrzeuganhänger (1), der nur die eine gebremste und mit ihrem Achskörper (12) starr am Chassis (4) montierte Fahrzeugachse (11) hat. Der Fahrzeuganhänger (1) ist mit einer Auflaufbremsvorrichtung (21) und einer Feststellbremsvorrichtung (22) sowie Bremskraftverteiler (27) und Bremskraftverstärker (26) der vorbeschrieben weiteren Varianten und Ausführungsformen von Figur 17 bis 25 ausgestattet. Ansonsten kann der Fahrzeuganhänger (1) wie der einachsige Fahrzeuganhänger von Figur 10 bis 13 ausgebildet sein.

Die in Figur 17 und 18 im Detail verdeutlichte Ausbildung der Radbremsen (23) und des Radbremsbetätigers mit Bremshebel (23') und Bremswelle (23") sowie Anschluss der Bremszüge (24,25) kann bei allen Varianten des Fahrzeuganhängers (1) eingesetzt werden.

Abwandlungen der gezeigten und beschriebenen Ausführungsformen sind in verschiedener Weise möglich. Die Feststellbremsvorrichtung (22) kann entfallen. In einer anderen Variante kann die Auflaufbremsvorrichtung (21) entfallen oder in anderer Weise ausgebildet sein.

Ferner sind Abwandlungen des Bremskraftverteilers (27) möglich. Beide Hüllenbefestigungen (35,35') vo3n Bremskraftübertrager (30) und Bremskraftübermittler (31) können relativ ortsfest, insbesondere am Achskörper (12) oder am hiervon distanzierten Stützsteg (45) angeordnet sein. Ferner können beide Zugseilbefestigungen (36,36') an der beweglichen und geführten Stellbrücke (44) angeordnet und montiert sein. Ein Bremskraftverstärker (26) kann entfallen. Die Armteile (52,53) können eine gleiche Länge haben. In weiterer Abwandlung können die Bowdenzüge (32) des auflaufbetätigten Bremskraftübertragers (30) und des feststellbetätigten Bremskraftübermittlers (31) beide mit der beweglichen Stellbrücke (44) verbunden und am relativ ortsfesten Stützsteg (45) abgestützt sein. Sie können beide mit den Zugseilen (34") der Bremszüge (24,25) gekoppelt sein und diese beim Auflaufbremsen und Feststellbremsen beaufschlagen.

### BEZUGSZEICHENLISTE

- 1: Fahrzeuganhänger, Tretradanhänger
- 2: Zugfahrzeug
- 3: Anhängerkupplung
- 4: Chassis
- 5: Längsträger
- 6: Querträger
- 7: Deichsel
- 8: Deichselholm
- 9: Fahrzeugrad
- 10: Fahrzeugachse lenkbar
- 11: Fahrzeugachse
- 12: Achskörper
- 13: Radschwinghebel
- 14: Achsbock
- 15: Lenkeinrichtung
- 16: Achsschenkellenkung
- 16': Achsschenkel
- 17: Lenkstange
- 18: Schwenkachse
- 19: Koppelstange
- 20: Bremsvorrichtung
- 21: Auflaufbremsvorrichtung
- 22: Feststellbremsvorrichtung
- 23: Radbremse
- 23': Bremshebel
- 23": Bremswelle
- 24: Bremszug
- 25: Bremszug
- 26: Bremskraftverstärker
- 27: Bremskraftverteiler
- 27': Gestell von Bremskraftverteiler
- 28: Auflaufeinrichtung
- 29: Bremsbetätiger
- 30: Bremskraftübertrager von Auflaufbremse
- 31: Bremskraftübermittler von Feststellbremse
- 32: Bowdenzug
- 33: Hülle von Bremskraftübertrager
- 33': Hülle von Bremskraftübermittler
- 33": Hülle von Bremszug
- 34: Zugseil von Bremskraftübertrager
- 34': Zugseil von Bremskraftübermittler
- 34": Zugseil von Bremszug
- 35: Hüllenbefestigung von Bremskraftübertrager
- 35': Hüllenbefestigung von Bremskraftübermittler
- 35": Hüllenbefestigung von Bremszug
- 36: Zugseilbefestigung von Bremskraftübertrager
- 36': Zugseilbefestigung von Bremskraftübermittler
- 36": Zugseilbefestigung von Bremszug
- 37: Auflaufrohr
- 38: Rohrverschluss
- 39: Führung
- 40: Dämpfer
- 41: Stützmittel, Stützbolzen
- 42: Ausschnitt
- 43: Stützbeschlag
- 44: Stellbrücke
- 45: Stützsteg
- 46: Stützbolzen
- 47: Durchgangsöffnung für Bremskraftübertrager
- 47': Durchgangsöffnung für Bremskraftübermittler
- 48: Lenkergetriebe
- 49: Gestell
- 50: Drehlager
- 51: Lenkerarm
- 52: Armteil kurz
- 53: Armteil lang
- 54: Koppelelement
- 55: Koppellager
- 56: Handbremshebel
- 57: Spannscheibe
- 58: Feder
- 59: Traggestell
- 60: Anschlag
- 61: Aufbau
- 62: Nabe
- 63: Stützteil
- 64: Bremsbacke
- 65: Bremstrommel
- 66: Schwenklager
- 67: Federsicherung
- 68: Feder

## Patentansprüche

1. Bremsvorrichtung für einen strassengängigen Fahrzeuganhänger, insbesondere Tretradanhänger, mit einer oder mehreren Fahrzeugachsen (10,11) und mit Fahrzeugrädern (9), wobei die Bremsvorrichtung (20) mechanisch betätigbare Radbremsen (23) mit Bremszügen (24,25) und eine Auflaufbremsvorrichtung (21) aufweist, welche eine mit einer Anhängerkupplung (3) verbindbare oder verbundene Auflaufeinrichtung (28) und einen Betätigungsstrang mit einem mechanischen Bremskraftübertrager (30) und einem externen Bremskraftverteiler (27) umfasst, wobei der mechanische Bremskraftübertrager (30) die Auflaufeinrichtung (28) mit dem Bremskraftverteiler (27) und den dort angeschlossenen Bremszügen (24,25) verbindet, **dadurch gekennzeichnet, dass** der Bremskraftübertrager (30) als Bowdenzug (32) ausgebildet ist, der eine äußere druckfeste Hülle (33), ein inneres zugfestes Zugseil (34) sowie jeweilige Hüllenbefestigungen (35) und Zugseilbefestigungen (36) an der Auflaufeinrichtung (26) und am Bremskraftverteiler (27) aufweist.

2. Bremsvorrichtung nach Anspruch 1, **dadurch gekennzeichnet, dass** der Bremskraftübertrager (30) derart ausgebildet und mit der Auflaufeinrichtung (28) verbunden ist, dass die Hüllenbefestigung (35) an der Auflaufeinrichtung (28) angeordnet ist, wobei bei der Auflaufbewegung die Hüllenbefestigung (35) an der Auflaufeinrichtung (28) bewegt und verstellt wird und wobei die Auflaufbewegung und die Auflaufbremskräfte über die druckfeste Hülle (33) des Bowdenzugs 32) übertragen werden.

3. Bremsvorrichtung nach Anspruch 2, **dadurch gekennzeichnet, dass** die Zugseilbefestigung (36) an der Auflaufeinrichtung (28) relativ ortsfest angeordnet und montiert ist, wobei sie bei der Auflaufbewegung nicht mitbewegt wird.

4. Bremsvorrichtung nach Anspruch 1, 2, oder 3, **dadurch gekennzeichnet, dass** die Auflaufeinrichtung (28) ein beim Auflaufen linear verschiebliches Auflaufrohr (37) und eine umgebende hülsenartige Führung (40) hierfür aufweist, wobei die Hüllenbefestigung (35) am Auflaufrohr (37) montiert ist, wobei bevorzugt die Zugseilbefestigungen (36) im Innenraum des Auflaufrohrs (37) an einem mit der Führung (40) verbundenen und gegenüber der Auflaufbewegung relativ ortsfesten Stützmittel (41) montiert ist.

5. Bremsvorrichtung nach einem der vorhergehenden Ansprüche, **dadurch gekennzeichnet, dass** die Auflaufeinrichtung (28) als Teil einer Lenkeinrichtung (15) für den Fahrzeuganhänger (1) ausgebildet ist, wobei Auflaufeinrichtung (28) mit einer Lenkstange (17) verbindbar oder verbunden ist oder die Auflaufeinrichtung (28) mit einer schwenkbaren Deichsel (7) verbindbar oder verbunden ist und die Deichsel (7) mit der Lenkstange (17) verbindbar oder verbunden ist.

6. Bremsvorrichtung nach einem der vorhergehenden Ansprüche, **dadurch gekennzeichnet, dass** der Bremskraftübertrager (28) derart ausgebildet und mit dem Bremskraftverteiler (27) verbunden ist, dass die Hüllenbefestigung (35) am Bremskraftverteiler (27) relativ ortsfest montiert ist und die Zugseilbefestigung (36) beweglich angeordnet sowie mit den Bremszügen (24,25) für deren Betätigung verbunden ist.

7. Bremsvorrichtung nach einem der vorhergehenden Ansprüche, **dadurch gekennzeichnet, dass** die Auflaufbremsvorrichtung (21) einen Bremskraftverstärker (26) im Betätigungsstrang, vorzugsweise am Bremskraftverteiler (27), aufweist, wobei bevorzugt der Bremskraftverstärker (26) ein Lenkergetriebe (48) mit schwenkbaren Lenkerarmen (51) und einer Übersetzung umfasst, wobei das Lenkergetriebe (48) zwischen der Zugseilbefestigung (36) des Bremskraftübertragers (30) und den Bremszügen (24,25) angeordnet ist.

8. Bremsvorrichtung nach Anspruch 7, **dadurch gekennzeichnet, dass** das Lenkergetriebe (48) abtriebseitig mit Hüllenbefestigungen (35") der Bremszüge (24,25) verbunden ist und diese bei der Auflaufbewegung betätigt.

9. Bremsvorrichtung nach einem der vorhergehenden Ansprüche, **dadurch gekennzeichnet, dass** die Bremsvorrichtung (18) eine mit den Bremszügen (24,25) verbundene Feststellbremsvorrichtung (22) umfasst, welche einen Bremsbetätiger (29) und einen mechanischen Bremskraftübermittler (31) aufweist, wobei der Bremskraftübertrager (30) der Auflaufbremsvorrichtung (21) und der Bremskraftübermittler (31) der Feststellbremsvorrichtung (22) getrennt voneinander und eigenständig, bevorzugt in einer Anordnung zentral und übereinander, mit dem Bremskraftverteiler (25) verbunden sind, wobei bevorzugt der Bremskraftübermittler (31) als Bowdenzug (32) ausgebildet ist, der eine äußere druckfeste Hülle (33'), ein inneres zugfestes Zugseil (34') sowie jeweilige Hüllenbefestigungen (35') und Zugseilbefestigungen (36') am Bremsbetätiger (29) und am Bremskraftverteiler (25) aufweist.

10. Bremsvorrichtung nach Anspruch 9, **dadurch gekennzeichnet, dass** die Bremszüge (24,25) der Radbremsen (23) jeweils als Bowdenzug (32) mit Bowdenzugteilen in Form einer äußeren druckfesten Hülle (33") und eines inneren zugfesten Zugseils (34") ausgebildet sind, wobei die Auflaufbremsvorrichtung (21) und die Feststellbremsvorrichtung (22) unterschiedliche Bowdenzugteile der Bremszüge (24,25) bewegen und verstellen.

11. Bremsvorrichtung nach Anspruch 9 oder 10, **dadurch gekennzeichnet, dass** der Bremskraftübermittler (31) derart ausgebildet und mit dem Bremskraftverteiler (27) verbunden ist, dass die Hüllenbefestigung (35') am Bremskraftverteiler (25) relativ ortsfest montiert ist und die Zugseilbefestigung (36') beweglich angeordnet sowie mit den Bremszügen (24,25) für deren Betätigung verbunden ist.

12. Bremsvorrichtung nach einem der vorhergehenden Ansprüche, **dadurch gekennzeichnet, dass** das Lenkergetriebe (48) des Bremskraftverstärkers (26) ein Gestell (49) mit außermittigen Drehlagern (50) für die Lenkerarme (51) aufweist, wodurch die Lenkerarme (51) jeweils in ein kurzes Armteil (52) und ein langes Armteil (53) unterteilt werden, wobei die langen Armteile (53) an ihrem Endbereich durch ein Koppelelement (54) drehbeweglich miteinander verbunden sind und wobei die Zugseilbefestigung (36) des Bremskraftübertragers (30) am Koppelelement (54) montiert ist und die Hüllenbefestigungen (35") der Bremszüge (24,25) jeweils am Endbereich eines kurzen Armteils (52) montiert sind.

13. Strassengängiger Fahrzeuganhänger, insbesondere Tretradanhänger, mit einer oder mehreren Fahrzeugachsen (10,11), mit Fahrzeugrädern (9) und mit einer Bremsvorrichtung (18), die mechanisch betätigbare Radbremsen (21) mit Bremszügen (24,25) und eine Auflaufbremsvorrichtung (21) aufweist, welche eine mit einer Anhängerkupplung (3) verbundene Auflaufeinrichtung (28) und einen Betätigungsstrang mit einem mechanischen Bremskraftübertrager (30) und einem externen Bremskraftverteiler (27) umfasst, wobei der mechanische Bremskraftübertrager (30) die Auflaufeinrichtung (28) mit dem Bremskraftverteiler (27) und den dort angeschlossenen Bremszügen (24,25) verbindet, **dadurch gekennzeichnet, dass** die Bremsvorrichtung (1) nach mindestens einem der Ansprüche 1 bis 12 ausgebildet ist.

14. Fahrzeuganhänger nach Anspruch 13, **dadurch gekennzeichnet, dass** der Fahrzeuganhänger (1) eine starre oder bewegliche, insbesondere schwenkbare, Deichsel (7) aufweist, wobei die Auflaufeinrichtung (28) an der Deichsel (7), insbesondere an einem Deichselholm (8), montiert ist.

15. Fahrzeuganhänger nach Anspruch 13 oder 14, **dadurch gekennzeichnet, dass** der Fahrzeuganhänger (1) eine lenkbare Fahrzeugachse (10) und eine Lenkeinrichtung (15) aufweist, wobei die Auflaufeinrichtung (28) an der lenkbaren Fahrzeugachse (10) montiert ist, wobei bevorzugt die Lenkeinrichtung (15) als Achsschenkellenkung (16) ausgebildet ist, wobei die Auflaufeinrichtung (28) schwenkbar an einem Achskörper (12) der lenkbaren Fahrzeugachse (10) oder an einer schwenkbaren Deichsel (7) montiert ist und wobei die Auflaufeinrichtung (28) oder die schwenkbare Deichsel (7) über eine Lenkstange (17) mit zumindest einem lenkbaren Achsschenkel (16') der Achsschenkellenkung (16) verbunden ist.
